# EUROPEAN PATENT SPECIFICATION

(11) **EP 1 966 938 B1**
(45) Date of publication and mention of the grant of the patent: **01.08.2012**
(21) Application number: 06847836.1
(22) Date of filing: 20.12.2006
(51) Int. Cl.: H04L 12/28

(54) **SYSTEM AND METHOD FOR A PROGRAMMABLE MULTIMEDIA CONTROLLER**
SYSTEM UND VERFAHREN FÜR EIN PROGRAMMIERBARES MULTIMEDIA-KONTROLLGERÄT
SYSTEME ET PROCEDE POUR CONTROLEUR MULTIMEDIA PROGRAMMABLE

(30) Priority: 20.12.2005 US 314664
(43) Date of publication of application: 10.09.2008
(73) Proprietor: Savant Systems LLC, Osterville, MA 02655 (US)
(72) Inventor: MADONNA, Robert, P., Osterville, MA 02655 (US); NOONAN, Michael, E., Sandwich, MA 02563 (US); ESCHHOLZ, Siegmar, K., Southwest Harbor, ME 04679 (US); ALLEN, James, F., Sandwich, MA 02563 (US); CORSINI, Peter, H., East Sandwich, MA 02537 (US)
(74) Representative: Rupprecht, Kay
(86) International application number: PCT/US2006/048625
(87) International publication number: WO 2007/075797

(56) References cited:
- EP-A- 0 727 909
- EP-A- 1 545 064
- EP-A2- 0 484 981
- WO-A-98/35517
- WO-A-99/63698
- WO-A-03/005714
- WO-A1-03/098847
- WO-A1-2004/077307
- US-A- 5 426 731
- US-A- 5 579 308

## Description

### BACKGROUND OF THE INVENTION

### Field of the Invention

The present invention relates generally to device interoperation and control, and more particularly to a programmable multimedia controller for switching and controlling audio, video, telephony, data, security, motor-operated, relay-operated, and/or other types of devices.

### Background Information

Recently, the complexity of consumer electronic devices has expanded dramatically as the cost of electronic hardware has decreased and new media have been introduced. While such advances have provided users with new capabilities at ever decreasing cost, they present additional problems in the areas of interconnectivity, interoperability, and control.

For example, at one time a user could "wire" a home stereo system with a minimal number of connections. Such connections were generally analog cables or simple wires. Stereo systems lacked the ability to interoperate with other devices, and control was rudimentary, limited to analog dials and buttons on the front face of the unit. Today, audio components support multi-channel surround sound and numerous analog and video interconnection formats through a variety of connectors. While many devices may be interconnected, there exist many issues of compatibility with new and competing connection formats. Many devices may only be interconnected and interoperated together with great difficulty. For example, the task of recording audio from an analog record player to a digital MP3 player, while seemingly simple at an abstract level, in practice generally involves significant cable interconnecting and configuration.

Similarly, control of electronic devices is now much more complex and a user is inundated with various remote control devices and interface schemes, each generally unique to a particular electronic device. For example a user desiring to watch a DVD movie with the lights dimmed and a telephone ringer suppressed may have to operate three remote controls, for a DVD player, a television, and an Audio/Video receiver, and possibly a device controller, for example an X10™ lighting controller, as well as telephone controls.

This type of difficulty extends beyond audio/video applications into many other areas of device control. For example, a user may desire to have their home security system, irrigation system, and lighting system interoperate such that while a user is away a particular security/watering/lighting scheme is activated. Typically, a user would be required to manipulate separate control interfaces, each implementing an independent and usually complicated control scheme, to implement such a system.

The difficulties of interoperation are even more apparent in a commercial setting where greater numbers of electronic devices are typically present. Stores, restaurants, recording studios, film studios, and other commercial venues wishing to control and switch audio, video and a wide range of other types of devices are confronted with difficult challenges in interoperability and control. Many available solutions prove overly costly, inflexible, and difficult to configure, such that a software engineer or other professional programmer is required even to make small configuration changes to the system.

As such, many home and commercial users under-utilize the capabilities of their electronic devices, minimally interconnecting them, and only controlling them in a basic manner. What is needed is an integrated device for controlling and interconnecting audio, video, telephony, data, security, motor-operated, relay-operated, and/or other types of devices. Such a system may offer a convergence solution, interconnecting electronic devices in an inter-operative manner to provide an integrated solution. Such a system should also be readily customizable, such that a user lacking advance software engineering training can configure and operate the system.

EP 0727909 A2 discloses an electronic-equipment control apparatus. The apparatus comprises various terminals connected to pieces of the electronic equipment. Various protocol converting units are provided. The protocol converting units each output data received from the terminals to at least one of the other protocol converting units in accordance with a predetermined internal protocol and output data received from another protocol converting unit to the terminals in accordance with a protocol for the electronic equipment connected thereto.

### SUMMARY OF THE INVENTION

In brief summary, the present invention provides a multimedia controller having the features of claim 1 and a method for operating a multimedia controller having the features of claim 23. Various embodiments of the invention are specified by the dependent claims.

The disclosure provides an integrated programmable multimedia controller for controlling and switching audio, video, telephony, data, security, motor-operated, relay-operated, and/or other types of devices. An audio switch and a video switch are interconnected to a microcontroller and a processing subsystem. Audio and video input and output modules are interconnected to the audio and video switches. These modules receive and output signals in a number of analog and digital formats, allowing the system to be interconnected to a wide range of devices. Received audio and video signals are converted to common digital formats for switching by the system. In response to control input from the microcontroller and the processing subsystem, the audio and video switches direct the digital signals to connections to output modules. Prior to output by the output modules, the digital signals are converted to desired output formats. Switching between inputs and outputs may be on an individual basis, where a particular input is connected to a particular output, or on a module-wide basis where a group of inputs from a selected module are output to another module.

In addition to audio and video devices, the programmable multimedia controller may be interconnected to a wide variety of other external devices via wired connections, such as RS232 and Ethernet, and/or wireless connections, such as infra-red, radio-frequency, WI-FI, Bluetooth(TM), ZigBee(TM) or another appropriate connections. In this way, operation of telephony, data, security, motor-operated, relay-operated, and/or other types of device is supported.

The processing subsystem of the programmable multimedia controller may include one or more computers. The computers may be small form factor general purpose personal computers that are operatively connected to the programmable multimedia controller via a connection plane. In such manner, "off the shelf" general purpose computers of suitable shape and size may be incorporated into the programmable multimedia controller's enclosure and employed to provide processing power for the system, and to execute application programs. Furthermore, the computers may be rack-mount or other stand-alone computers that are not interconnected via a connection plane, but rather communicate with the home multimedia controller via a network inter-connection. The computers may be configured to provide load balancing and/or redundancy.

Moreover, a media player, such as a DVD player, or other device capable of displaying data and generating an output in response to user selection, may be used to control the programmable multimedia controller as part of embedded control technique. The media player embeds control information into an output signal in response to selection of menu items or other representations. For example, if the media player is a DVD player, a user may select DVD menu items that cause predetermined information to be embedded into an audio signal generated by the DVD player. The embedded control information is transmitted to the programmable multimedia controller via a wireless or wired interconnection, where the information is decoded to generate control commands used by the system. The embedded control technique may use a robbed bit control technique where the least significant bit of each word of a digital audio signal is used to store embedded control information. The embedded control technique may use a tone control technique, where the control device generates an audio tone in response to user selection, and the audio tone is decoded by the programmable multimedia controller to generate a particular control command.

The programmable multimedia controller may implement a video overlay feature that allows video, still frames, and/or text to be overlaid at any desired location of a display screen. Such overlays may be computer graphics generated by the processing subsystem to display differing types of information to the user. The region of display may be repositioned on a frame-by-frame basis, for example, to create a "moving" overlay or other special effect.

The processing subsystem may change the colors associated with pixels in a region of a video frame to a predetermined color. A video mixer thereafter recognizes occurrences of pixels of the predetermined color, and at each pixel where the color is present, substitutes data from the processing subsystem. In such manner, each frame of a video signal may be overlaid with data from another source. Such a technique may be readily extended, through use of multiple predetermined colors, to permit multiple independent video overlays.

The programmable multimedia controller may be interconnected to additional programmable multimedia controllers via an expansion port allowing the system to be readily expanded if additional connectivity is needed.

### BRIEF DESCRIPTION OF THE DRAWINGS

The invention may be better understood by referring to the following description in conjunction with the accompanying drawings in which like reference numerals indicate identical or functionally similar elements:
FIG. 1 is a block diagram of a programmable multimedia controller, interconnected to a number of devices, according to an illustrative embodiment of the present invention.
FIG. 2 is a schematic block diagram showing a high-level hardware architecture of the programmable multimedia controller;
FIG. 3 is a schematic block diagram of an audio switch interconnected to a plurality of input and output modules in accordance with an illustrative embodiment of the present invention;
FIG. 4 is a schematic block diagram of an exemplary Digital Audio Input Module;
FIG. 5 is a schematic block diagram of an exemplary Analog Audio Input Module;
FIG. 6 is a schematic block diagram of an exemplary Digital Video Input Module with High-Definition Multimedia Interface (HDMI);
Fig. 7 is a schematic block diagram of an exemplary Auxiliary Audio/Video Port;
Fig. 8 is a schematic block diagram of an exemplary Digital Audio Output Module;
Fig. 9 is a schematic block diagram of an exemplary Analog Audio Output Module;
Fig. 10 is a schematic block diagram of an exemplary Video Output Module with HMDI;
Fig. 11 is a schematic block diagram of the video switch interconnected to a plurality of input and output modules in accordance with an illustrative embodiment of the present invention;
Fig. 12 is a schematic block diagram of an exemplary Analog Video Input Module;
Fig. 13 is a schematic block diagram of an exemplary Combination Analog and Digital Video Input Module;
Fig. 14 is a schematic block diagram of a processing subsystem according to an illustrative embodiment of the present invention;
Fig. 15 is a perspective view showing a number of connection ports on an exemplary small form factor general purpose personal computer;
Fig. 16 is view of a portion of the front face of the programmable multimedia controller constructed in accordance with an illustrative embodiment of the present invention and depicting two small form factor general purpose personal computers inserted into bays;
Fig. 17a is a stylized block diagram showing control units interconnected to a programmable multimedia controller according to an illustrative embodiment of the present invention;
Fig. 17b is a schematic block diagram of an exemplary embedded control technique that uses robbed bit control;
Fig. 18 is a schematic block diagram of an exemplary audio interconnection and expansion scheme;
Fig. 19 is a schematic block diagram of an exemplary video interconnection and expansion scheme; and
Fig. 20 is a schematic block diagram showing two programmable multimedia controllers used in an exemplary application, specifically a professional audio recording and mixing application.

### DETAILED DESCRIPTION OF AN ILLUSTRATIVE EMBODIMENT

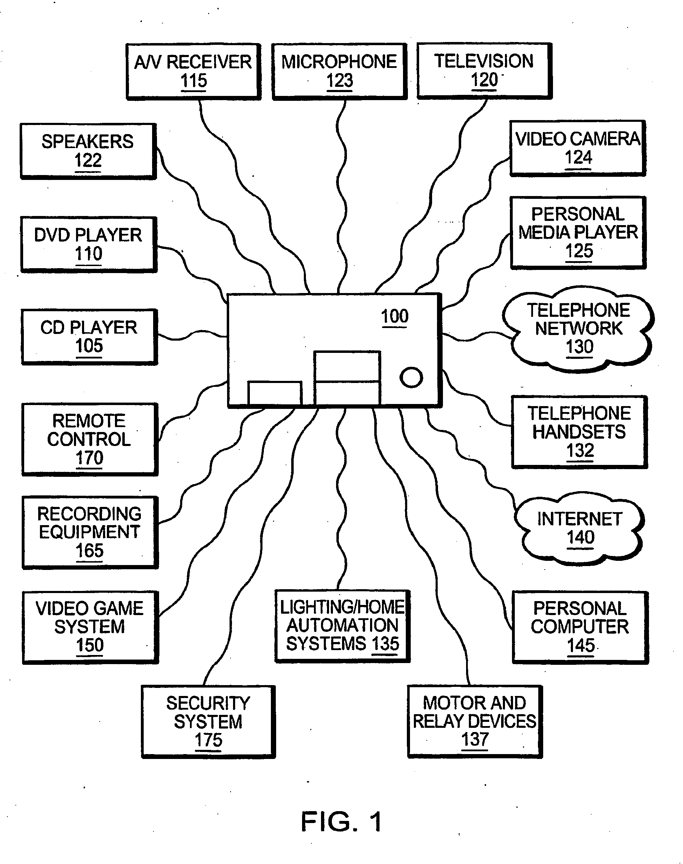

Fig. 1 is a block diagram of a programmable multimedia controller 100, interconnected to a number of devices, according to an illustrative embodiment of the present invention. The term "programmable multimedia controller" should be interpreted broadly as a device capable of controlling, switching data between, and/or otherwise interoperating with, a variety of electronic devices, such as audio, video, telephony, data, security, motor-operated, relay-operated, and/or other types of devices. By interacting with these devices, the programmable multimedia controller 100 may implement an integrated multimedia control solution.

In the illustrative embodiment, the programmable multimedia controller 100 is connected to a wide range of audio/video components, for example, a compact disk (CD) player 105, a digital video disc (DVD) player 110, an audio/video receiver 115, a television 120, a personal media player 125, speakers 122, a microphone 123, and/or a video camera 124. The programmable multimedia controller may also be connected to telephony devices such as a telephone network 130 and telephone handsets 132. The telephone network 130 may be a publicly switched telephone network (PSTN), an Integrated Services Digital Network (ISDN) or other communications network.

In addition, the programmable multimedia controller may intercommunicate with variety of lighting and/or home automation systems 135. These devices may operate via the X10 protocol developed by Pico Electronics, the INSTEON(TM) protocol developed by SmartHome, Inc, the CEBus standard managed by the CEBus Industry Council, RS232, or another well known automation or control protocol. Similarly the controller may be connected to motor and/or relay operated devices 137 that may include, for example, a heating, ventilation and air conditioning (HVAC) system, an irrigation system, an automatic shade or blind system, an electronic door lock, or other types of devices.

A computer network, such as the Internet 140, is connected to the programmable multimedia controller. In addition, a personal computer (PC) 145, video game systems 150, home or studio recording equipment 165 or other devices may also be connected. Further, one or more remote control units 170 may be provided to manage the controller's functionality, and/or to control devices connected to the controller. Such remote control units 170 may be interconnected to the controller via a wired network connection or a wireless connection such as an infra-red link, a radio-frequency link, a Bluetooth(TM) link, a ZigBee(TM) link, WI-FI, or another appropriate data connection.

In addition to providing interconnection to a wide variety of devices, the programmable multimedia controller is able to combine, synthesize, and otherwise processes various data types to implement an integrated multimedia solution for a user. Reference is made to U.S. Patent Application Serial No. 11/314,112 PROGRAMMABLE MULTIMEDIA CONTROLLER WITH PROGRAMMABLE SERVICES, for a detailed description of the various novel services and capabilities that are provided.

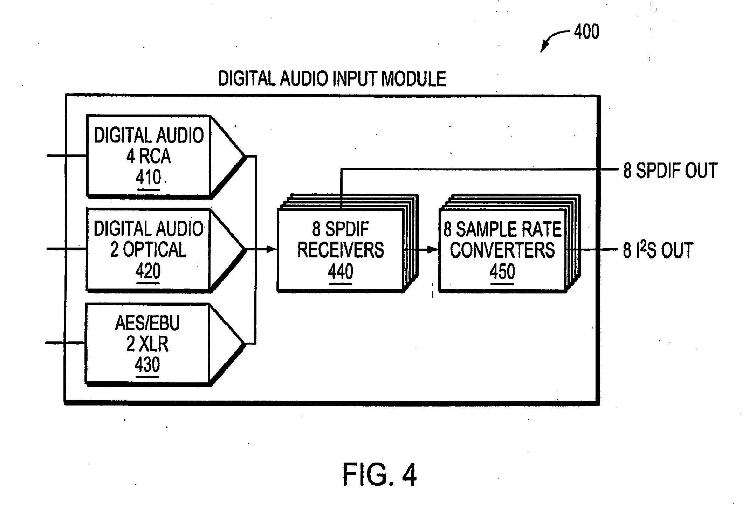

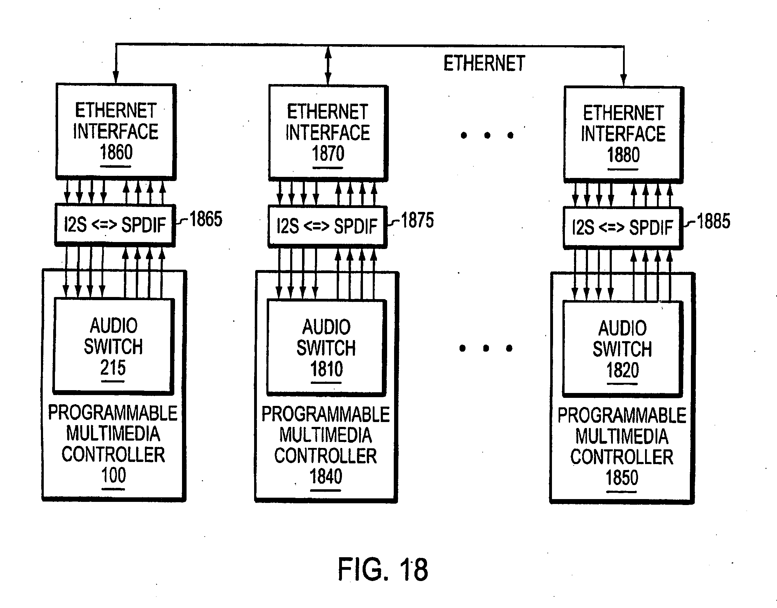

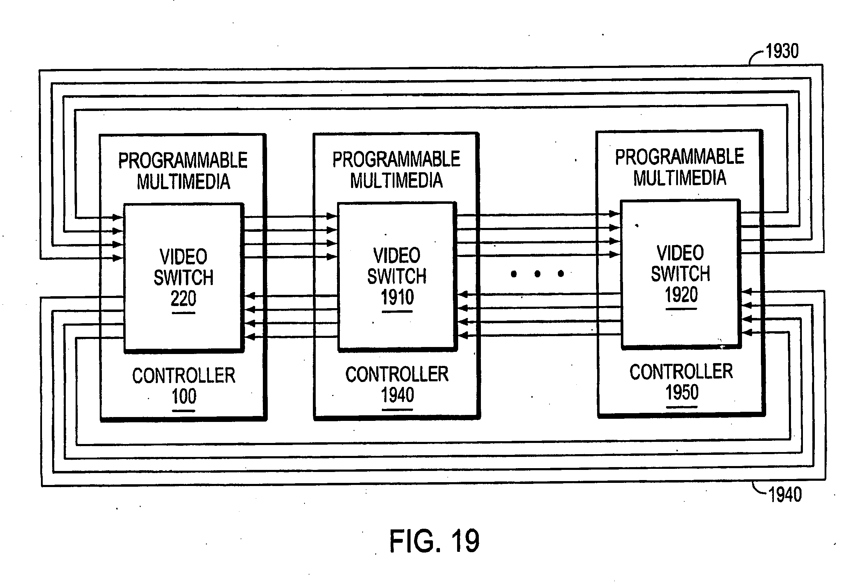

To facilitate the above described interconnections and processing, the programmable multimedia controller 100 may be arranged in a modular manner. For example, in one embodiment, the programmable multimedia controller 100 is arranged to have twelve separate input and output modules, each having a number of connection ports. The input and output modules are inserted into slots or module bays of the programmable multimedia controller 100. The modules interface with a mid-plane that provides connection to the rest of the system. By embracing a modular approach, a user is allowed to select the specific modules desired, and the system may be customized to fit a particular application. In addition, entry level pricing may be reduced by allowing a user to purchase a base configuration, with limited capabilities, and then add to the system by purchasing addition modules. Several examples of modules are discussed below, in reference to Figs. 4-10, 12 and 13. It is expressly contemplated that a wide variety of additional modules may be provided, and, accordingly, this disclosure should be interpreted to embrace such other possible configurations. It is also contemplated that several programmable multimedia controllers may be interconnected to create a larger system, in effect implementing a modular-type solution at the controller level. Further details regarding such interconnection and expansion may be found below in reference to Figs. 18 and 19.

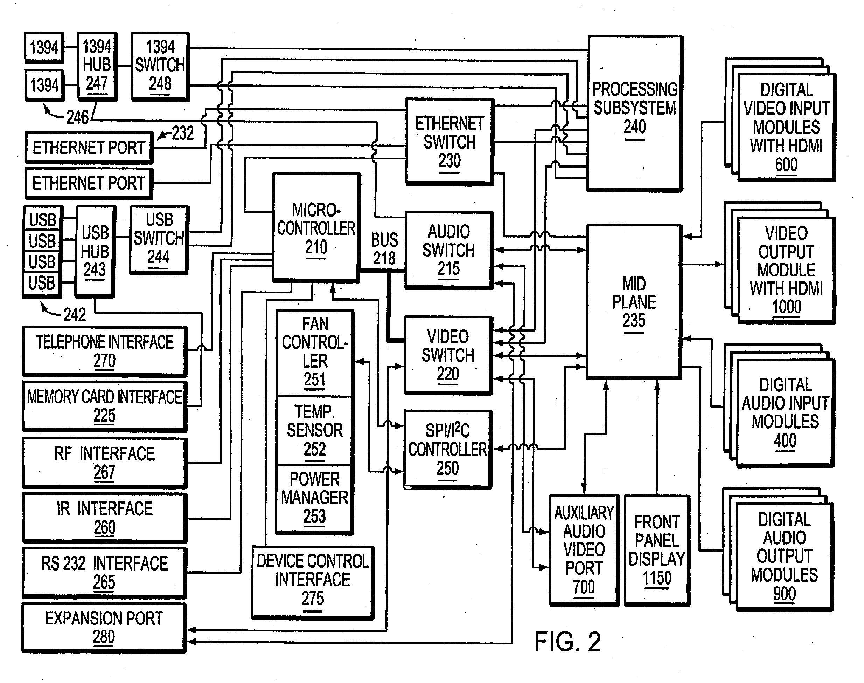

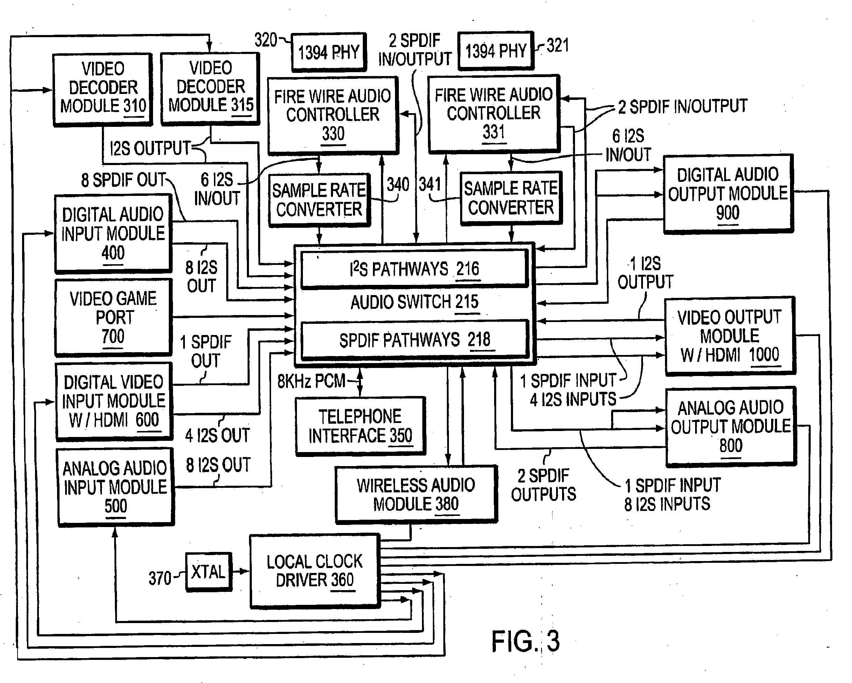

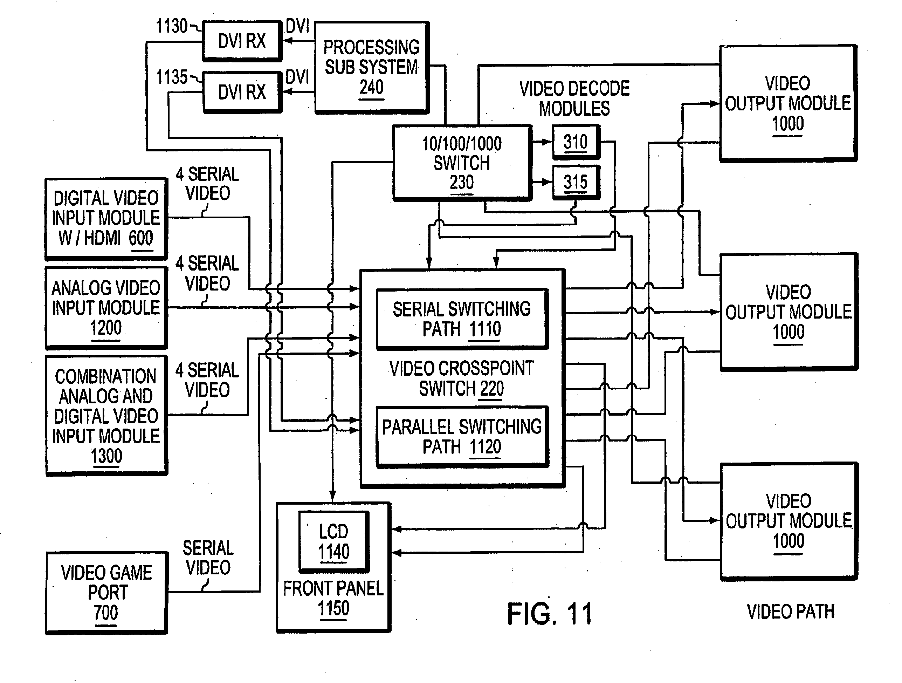

Fig. 2 is a schematic block diagram showing a high-level hardware architecture of the programmable multimedia controller. The various components shown may be arranged on a "motherboard" of the controller, or on a plurality of cards interconnected by a backplane (not shown). A microcontroller 210 manages the general operation of the system. In the illustrative embodiment, the microcontroller is a 32-bit model MCF5234 microcontroller available from Freescale Semiconductor Inc. The microcontroller 210 is coupled to an audio switch 215 and a video switch 220 via a bus 218. The audio switch 215 and the video switch 220 are preferably crosspoint switches capable of switching a number of connections simultaneously. However many other types of switches capable of switching digital signals may be employed, for example Time Division Multiplexing (TDM) switches or other devices. Further discussion of the audio and video switches may be found below in reference to Fig. 3 and Fig. 11.

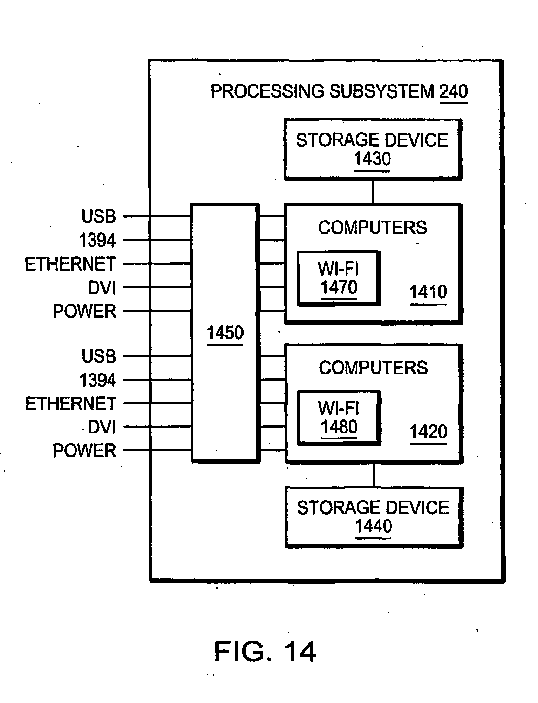

A mid plane 235 interconnects the switches to a variety of input and output modules such as, for example, Digital Video Input Modules with HDMI 600, Video Output Modules with HDMI 1000, Digital Audio Input Modules 400, and Digital Audio Output Modules 900. The mid plane 235 is further coupled to an Ethernet switch 230 that permits switching of 10BaseT, 100BaseT or Gigabyte Ethernet signals. The Ethernet switch 230 interconnects Ethernet ports 232 and a processing subsystem 240 to the microcontroller 210. In one embodiment, the processing subsystem 240 includes a plurality of small form factor general purpose personal computers that provide redundant operation and/or load balancing. In some embodiments, the processing subsystem 240 may include one or more storage devices, external to the personal computers, to provide expanded storage capacity, for example, to store digital media. Further discussion of the various embodiments of the data processing subsystem 240 may be found below in reference to Figs. 14-16.

Also, a number of Universal Serial Bus (USB) ports 242 are interconnected to a USB hub 243 for interconnection to the processing subsystem 240. A memory card interface 225 may also be connected to the USB hub 243. The interface accepts one or more well-known memory card formats, for example CompactFlash™ cards, Memory Stick™ cards, Secure Digital™ (SD) cards, or other formats. A USB switch 244 is employed to switch USB links among the multiple processing components that may be present in the processing subsystem 240. In a similar manner, a number of IEEE 1394 (FireWire™) ports 246 are interconnected to an IEEE 1394 hub 247 and to an IEEE 1394 switch 248.

The microcontroller 210 is further connected to a Serial Peripheral Interface (SPI) and Inter-Integrated Circuit (I²C) distribution circuit 250, which provides a serial communication interface to relatively low data transfer rate devices. The SPI/ I²C controller 250 is connected to the mid-plane connector 235 and thereby provides control commands from the microcontroller 210 to the modules and other devices in the programmable multimedia controller 100. Further connections from SPI/ I²C controller 250 are provided to devices such as a fan controller 251, a temperature sensor 252 and a power manager circuit 253, which manage the thermal characteristics of the system and prevent overheating.

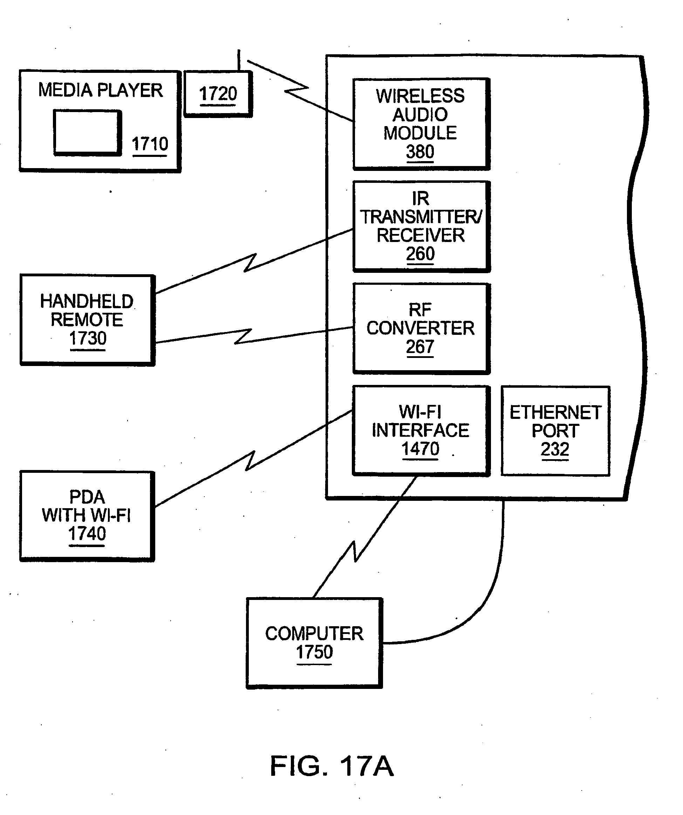

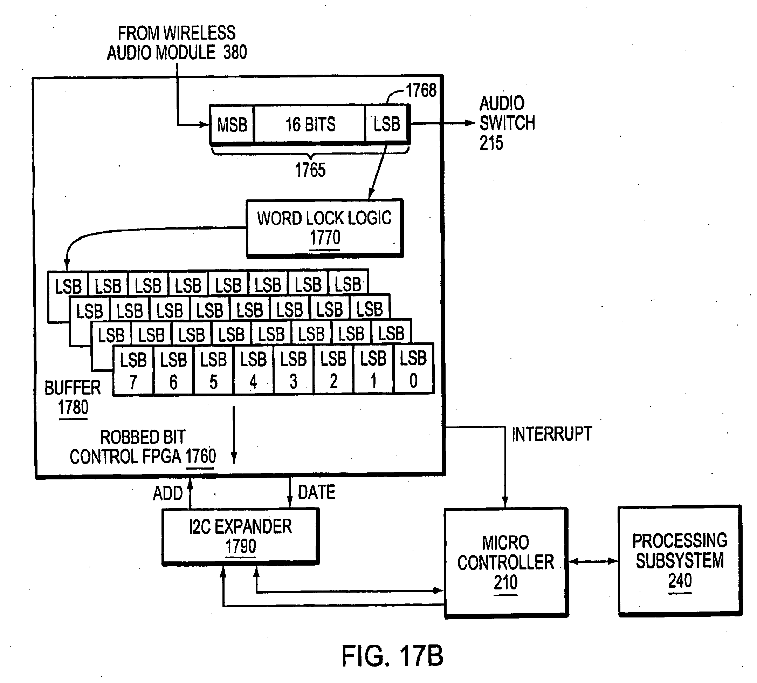

The microcontroller 210 is also connected to Infra-Red (IR) interface 260, an RS232 interface 265, and an RF interface 267, that permit interconnection with external devices. Such interaction permits programmable multimedia controller 100 to control external devices. In addition the interfaces may receive control signals that control the operation of the programmable multimedia controller itself. It is expressly contemplated that various other interfaces, including WI-FI, Bluetooth™, ZigBee™ and other wired and wireless interfaces, may be used with the multimedia controller 100. Further discussion of such interfaces may be found below in reference to Fig. 17a and Fig 17b.

In addition, an Auxiliary Audio/Video Port 700 is provided for interconnecting one or more video game systems, camcorders, computers, karaoke machines, or other devices. A telephone interface 270 is provided for connecting to the public switch telephone network or to a private network, and to connect to one or more telephone handsets. Further, a device control interface 275 is provided to communicate with lighting, home automation, and motor and/or relay operated devices. As discussed in more detail below, an expansion port 280 is provided for linking several programmable multimedia controllers together to form an expanded system. Finally, a front panel display 1150 permits presentation of status, configuration, and/or other information to a user. In one embodiment the front panel display may accept video data originating from any input source connected to the system, such that a user may preview video content on the front panel display 1150. In another embodiment, the front panel display 1150 includes a touch sensitive screen, and a user may enter control selections by selecting icons or other representations on the screen. In this manner the front panel display 1150 may be used for control and configuration of the system.

### Audio Switching Pathways

Fig. 3 is a schematic block diagram of the audio switch 215 interconnected to a plurality of input and output modules in an illustrative embodiment of the programmable multimedia controller 100. The audio switch 215 is preferably a Field Programmable Gate Array (FPGA) such as the Virtex-II Pro Field Programmable Gate Array, model XC2VPS-6FF672C, available from Xilinx, Inc. Alternately, the audio switch 215 switch may be another commercially available integrated circuit that is capable of simultaneously switching a plurality of signals. The audio switch 215 is configured to accept a plurality of inputs from input modules, and to switch these inputs to a plurality of outputs leading to output modules and/or other devices. Switching between inputs and outputs may occur on an individual basis, i.e., between a particular input and a particular output, or on a module-wide basis, where several inputs from a particular module are connected to several outputs leading to another module.

Prior to transmission to the audio switch 215, audio signals are converted to common audio formats. The common format allows any input to be switched to any output. For example, all audio signals may be converted to the well Sony/Philips Digital Interconnect Format (S/PDIF). Alternately, all audio signals may be converted the Inter-IC Sound (I²S) format. It will be apparent to one skilled in the art that a wide variety of other formats may be used, and accordingly this description should be taken by way of example. Similarly, a variety of combinations of multiple predetermined audio formats may be used. In the illustrative embodiment of the present invention, pulse code modulated (PCM) audio is sent as I²S signals, while encoded audio (non-PCM audio) is sent as SPDIF signals. The audio switch 215 is configured to switch both formats of signals employing separated I²S pathways 216 and SPDIF pathways 218.

In one embodiment, I²S signals may be used to transport non-standard audio formats using a blank data frame technique. Input modules may send audio signals to one or more asynchronous sample rate converters, for example Cirrus Logic model CS8421 1 converters, that may insert blank frames between audio frames or over-sample the incoming audio data. In this manner non-standard bit rate signals may be converted to predetermined data transfer rate, such as 192K samples per second. An independent clock signal, indicating which frames contain actual audio data, and which frames are blank, may be switched along with the audio data to the output modules. At the output modules, the clock signal is used to separate the audio data from the blank frames, and to play back the audio at the proper rate. In this manner, the audio switch 215 may support a variety of non-standard audio bit rates with minimal additional circuitry.

In the illustrative embodiment, the audio switch 215 is connected to several input modules, such as a Digital Audio Input Module 400, an Analog Audio Input Module 500, Digital Video Input Module with High-Definition Multimedia Interface (HDMI) 600 and a Video Game Port 700. Similarly, the audio switch 215 is interconnected to several output modules including an Analog Audio Output Module 800, a Digital Audio Output Module 900, and a Video Output Module with HDMI 1000. The details of these modules are discussed below in reference to Figs. 4-10. In addition, a Wireless Audio Input Output Module 380 is interconnected to the switch. In one embodiment, the Wireless Audio Input Output Module 380 has a plurality of RF transceivers that operate in the 2.4GHz ISM band, a number of types of which are commercially available. Such transceivers may send and receive up to a 1.54 MBit/s audio stream on each wireless data channel, thereby permitting interconnection with remote audio devices that utilized high quality audio data streams. The Wireless Audio Input Output Module 380 may also be used to send and receive control information, as is described in more detail below in reference to Figs. 17a and 17b.

Additional audio interconnection is provided to the processing subsystem 240, via one or more IEEE 1394 connections and associated circuitry. A pair of IEEE 1394 physical layer cable transceiver/arbiters 320, 321, such as the model TSB41AB1 transceiver/arbiters available from Texas Instruments Inc., provide physical networking layer functionality. Thereafter, data is passed to FireWire audio controllers 330, 331, such as Oxford Semiconductor Inc. model OXFW971 controllers. Outputs from the FireWire audio controllers 330, 331 may either pass to S/PDIF transceivers (not show), such as ATK Inc. model AK4117 transceivers, for conversion into S/PDIF signals, or pass to sample rate converters 340, 341, such as model CS8421 asynchronous sample-rate converters, available from Cirrus Logic Inc.

Further, one or more Video Decoder Modules 310, 315 are interconnected to the audio switch 215. The Video Decoder Modules 310, 315 may use specialized decoding circuits to offload video decoding tasks from the processing subsystem 240, and thereby enhance system performance.

Also, in the illustrative embodiment, the audio switch 215 is interconnected to a telephone interface 350. Such an interface comprises Foreign eXchange Office (FXO) and Foreign eXchange Subscriber (FXS) circuitry for connection to Plain Old Telephone Service (POTS). The interface may also contain circuitry to permit direct connection of telephone handsets to the system.

All modules are interconnected to a system clock driven by a local clock driver circuit 360. Such a circuit, in conjunction with a crystal oscillator (XTAL) 370, produces a local master clock that permits synchronous switching operation in the system.

Fig. 4 is a schematic block diagram of an exemplary Digital Audio Input Module 400. Digital audio is accepted by the module via digital RCA connections 410 that support S/PDIF signals, optical connections 420 that accept TOSLINK™ (a registered trademark of Toshiba corporation), and XLR connections 430, commonly used in professional audio applications, that supports the Audio Engineering Society / European Broadcasting Union (AES/EBU) digital audio standard. Each connection may accept signals with sampling rates of 32kHz, 44.1kHz, 88.2kHz, 96hHz, 176kHz, 192kHz or of other rates. Further, audio signals may be Pulse Code Modulated (PCM) or non-PCM. Such flexibility allows common encoding schemes such as Dolby Digital, DTS, Mpeg, THX, and other formats to be supported. In one embodiment, the incoming digital audio signals are first converted to Transistor-Transistor Logic (TTL) logic levels by a level converter circuit (not shown). Alternately, the signals may be converted to Low Voltage Differential Signaling (LVDS) logic levels.

Eight S/PDIF Receivers, such as the Cirrus Logic model CS8415 digital audio receivers, may accept the audio signals and output them on S/PDIF outputs. Similarly, 8 sample rate converters 450, such as model CS8421 asynchronous sample-rate converters available from Cirrus Logic Inc., may output audio data on I²S outputs interconnected to the audio switch 215.

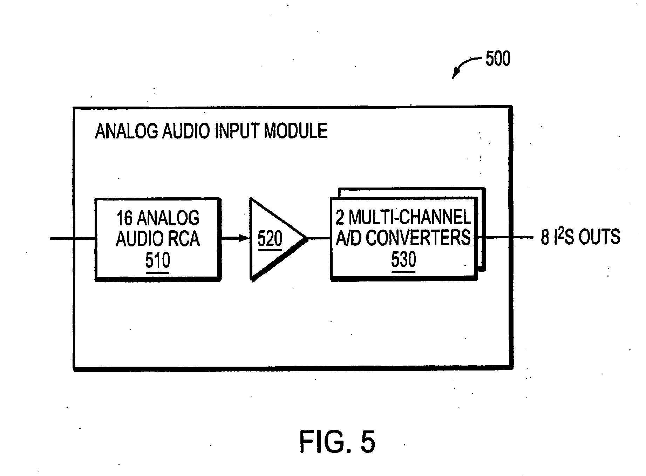

Fig. 5 is a schematic block diagram of an exemplary Analog Audio Input Module 500. In the illustrative embodiment, analog audio is accepted via RCA connectors 510. Alternately, audio may be accepted by XLR connectors that support the XLR format now common in professional audio cabling. Analog audio signals pass though one or more operation amplifiers 520 for normalization, and thereafter are sent to multi-channel analog to digital converters 530, such as model CS5368 8-channel A/D converters available from Cirrus Logic Inc.. The multi-channel analog to digital converters 530 sample the analog audio signals, and output I²S serial data streams to the audio switch 215.

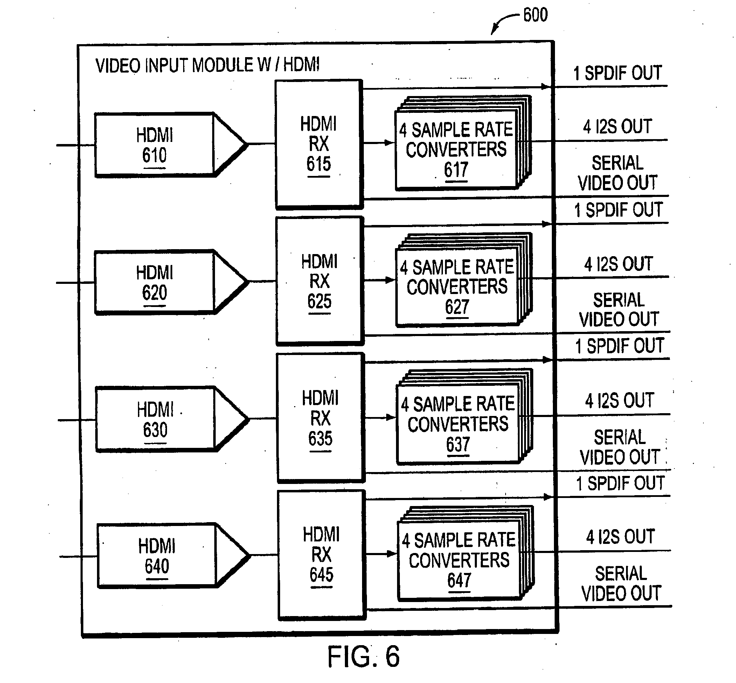

Fig. 6 is a schematic block diagram of an exemplary Digital Video Input Module with High-Definition Multimedia Interface (HDMI) 600. The audio aspects of this module are discussed here, while the video aspects are revisited below in later discussion. The Digital Video Input Module with HMDI 600 provides one or more digital audio/video interfaces, in the illustrative embodiment four digital interfaces 610, 620, 630, 640, that receive multi-channel digital audio and high-definition video via a single connector. In this way, HDMI reduces cabling requirements and may be advantageously employed with set-top boxes, DVD players, A/V receivers, digital televisions and other devices. HDMI signals are received and decompressed by HDMI receivers 615, 625, 635, 645, for example a model SiI9031 HDMI receivers available from Silicon Image Inc. In the illustrative embodiment, the HDMI receivers output a S/PDIF signal to the audio switch 215, as well as connect to sample rate converters 617, 627, 637, 647 that output additional I²S streams to the audio switch 215.

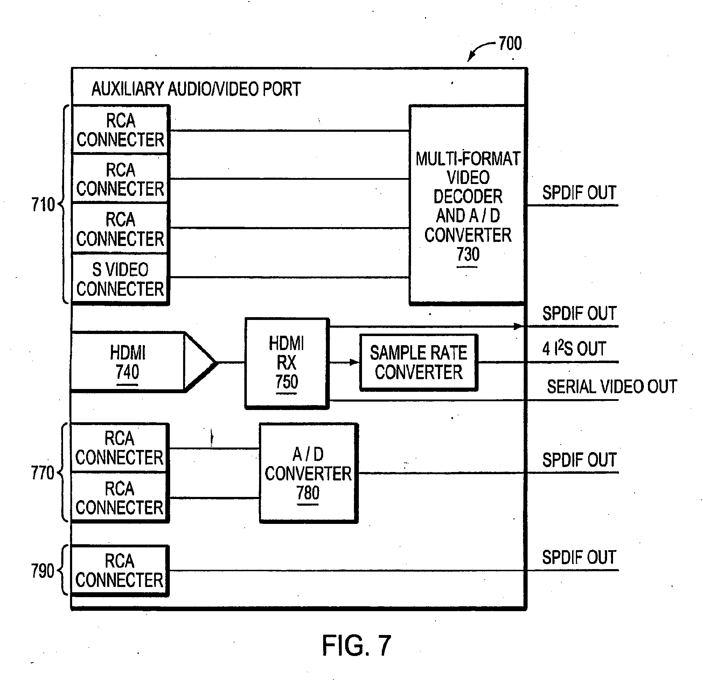

Fig. 7 is a schematic block diagram of an exemplary Video Game Port 700. The port may have connections located on the front face of the programmable multimedia controller 100 to permit easy attachment and detachment of video game systems, such as Xbox™, Playstation™ or other popular systems. The audio aspects of this module are discussed here, while the video aspects are discussed below. The Video Game Port 700 has a HDMI connector 740 interconnected to a HDMI receiver 750, which outputs a S/PDIF signal as well as I²S signals to the audio switch 215. Further, the Video Game Port 700 has RCA connectors 770 for receiving analog audio signals. Such analog audio is converted to digital audio by an A/D converter 780. A digital audio stream, for example a S/PDIF stream, may also be received by a RCA connector 790 and passed to the audio switch 215.

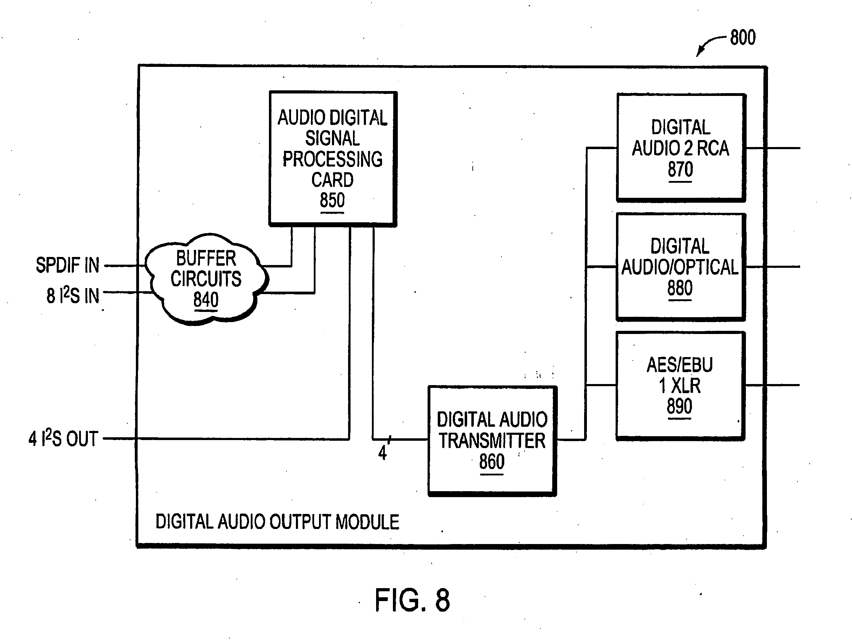

Fig. 8 is a schematic block diagram of an exemplary Digital Audio Output Module 800. In one embodiment, the Digital Audio Output Module 800 accepts a S/PDIF input from the audio switch 215, as well as I²S inputs. Such inputs are routed to buffering circuits 840 and then to an audio digital signal processing (DSP) card 850, for example a model DAE-7 card available from Momentum Data Systems or other DSP card. DSP card 850 includes a VLIW processor, to provide computation power necessary to decode surround sound audio signal formats and implement sound field processing. Outputs from the audio DSP card 850, in the I²S format, are passed to a digital audio transmitter 860. The transmitter preferably supports a variety of popular digital audio standards such as S/PDIF and AES/EBU. In one embodiment, the digital audio transmitter 860 is a model AK 4101 transmitter available from AKM Semiconductor Inc. and offers eight digital audio channels. The outputs of the digital audio transmitter 860 are connected to a combination of digital RCA connections 870 that support S/PDIF signals, a digital optical TOSLINK™ connection 880, and an XLR connection 890 that supports the AES/EBU.

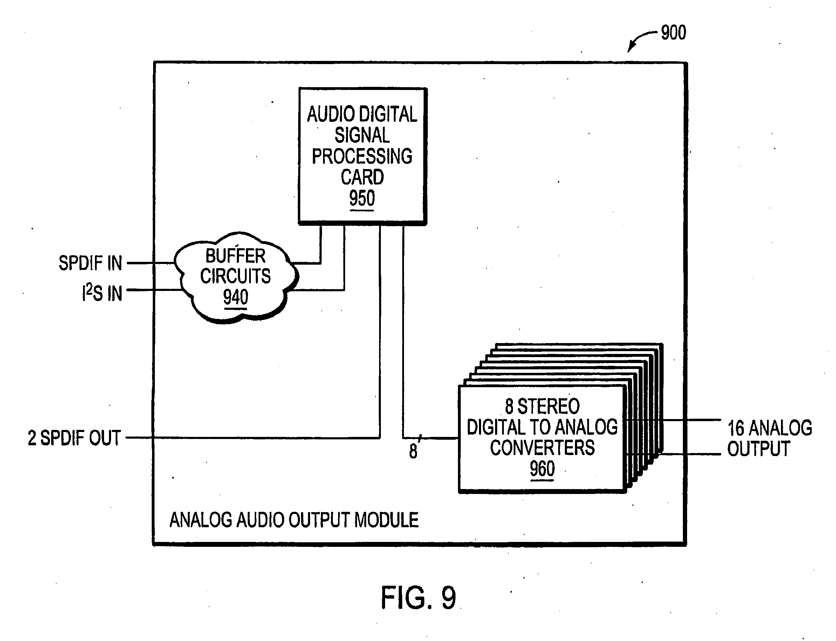

Fig. 9 is a schematic block diagram of an exemplary Analog Audio Output Module 900. In the illustrative embodiment, the Analog Audio Output Module 900 accepts an S/PDIF input from the audio switch 215, as well as I²S inputs. Such inputs are routed to buffering circuits 940 and then to an audio DSP card 950. The audio DSP card 950 may be, for example, a model DAE-7 card available from Momentum Data Systems. Some outputs of the audio DSP card 950 are connected to S/PDIF lines for transmission back to the audio switch 215. For example, decoded audio signals may be sent back to the switch and routed to another audio output module for output. Other outputs of the audio DSP card 950 are connected to stereo digital to analog (D/A) converts 960 that provide analog outputs to devices. In one embodiment, these outputs are RCA style outputs that use analog RCA connectors. The Analog Audio Output Module 900 may be configured by software to support a variety of surround sound schemes. For example, the analog outputs may be configures as two separate 7.1 surround sound zones. Alternate configurations include, two separate 5.1 surround sound zones and four stereo zones, one 7.1 surround sound zone and four stereo zones, eight stereo zones, or other configurations. As zoning may be controlled largely via software configuration, the system may be readily reconfigured to meet a user's changing requirements.

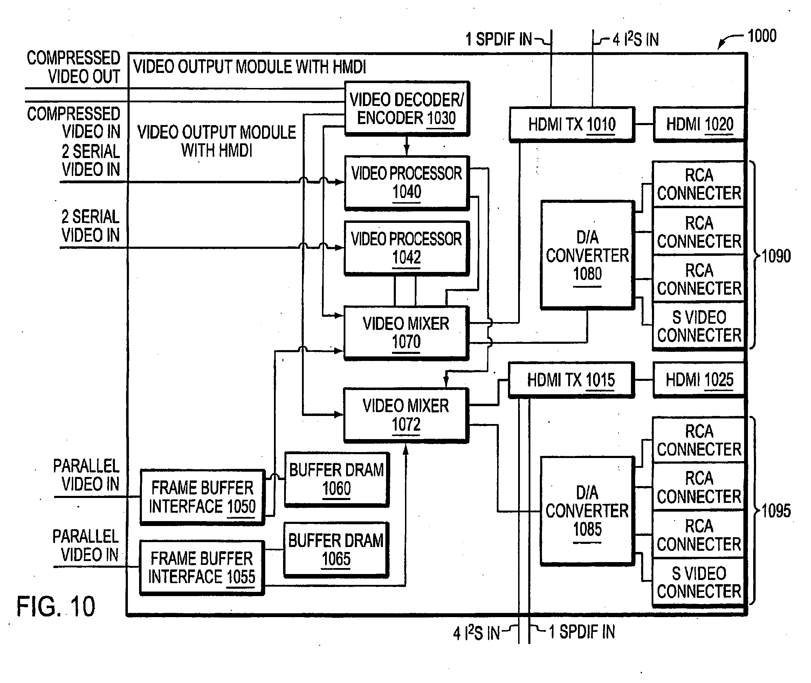

Fig. 10 is a schematic block diagram of an exemplary Video Output Module with HMDI 1000. The audio aspects of this module are discussed here, while the video aspects are discussed below. A S/PDIF input and a plurality of I²S inputs are connected to HDMI transmitters 1010, 1015 that output combined multi-channel audio and high definition digital video signals on HDMI ports 1020, 1025. In this way, a single audio/video cable connection is provided to compatible external devices.

### Video Switching Pathways

Fig. 11 is a schematic block diagram of the video switch 220 interconnected to a plurality of input and output modules, in accordance with an illustrative embodiment of the present invention. The video switch 220 may switch digital video in the Red/Green/Blue (RGB) and/or Luminance, Chroma: Blue, Chroma: Red (YCbCr) color space, and is preferably resolution independent. Such a switch is configured to accept a plurality of inputs from video input modules, and switch these inputs to a plurality of outputs that lead to video output modules and/or other components. Switching between inputs and outputs may occur on an individual basis, i.e., between a particular input to a particular output, or on a module-wide basis where several lines from one module are switched to connect to several lines of another module.

Prior to transmission to the video switch 220, video is preferable converted into common video format. The common format allows any input to be switched to any output. For example, all video signals may be converted to a serial digital video format, or to a parallel digital video format, prior to entering the switch. In one embodiment the serial digital video signals may be Serial Digital Interface (SDI) signals. Alternately, the video switch 220 may be configured to switch a combination of different video formats. In the illustrative embodiment, the video switch is configured to switch serial digital video via serial switching paths 1110, and to switch parallel video signals via parallel switching paths 1120. Video data may Standard Definition (SD) (i.e. 480i@30,480p@60, etc.), High Definition (HD) (i.e. 720p@60, 1080i@60, etc.) or non-standard (for example, VGA, SVGA, XVGA, etc.) and/or with blank/sync frame information is embedded in the video data stream. A pixel clock may be independently switched to the output module to allow full reconstruction of both standard and non-standard video signals.

In the illustrative embodiment, the video switch 220 is connected to several input modules, such as a Digital Video Input Module with HDMI 600, an Analog Video Input Module 1200, and a Combination Analog and Digital Video Input Module 1300. The video switch 220 is further interconnected to the data processing subsystem 240. In the illustrative embodiment, the data processing subsystem 240 outputs Digital Visual Interface (DVI) signals, a RGB format commonly used with computer displays, such as flat panel Liquid Crystal Displays (LCDs). The DVI signals may be converted by DVI receivers 1130, 1135 to YCbCr signals, prior to arriving at the video switch 220, or may be routed to the switch in the DVI format. The data processing subsystem 240 may also output compressed video, for example Moving Picture Experts Group (MPEG) encoded video, over one or more Ethernet connections. It is expressly contemplated that other encoding standards may be employed in addition to MPEG, and accordingly this description should only be taken by way of example. In the illustrative embodiment, the Ethernet switch 230 is responsible for switching all compressed video data originating from the processing subsystem 240.

The video switch 220, in combination with the Ethernet switch 230, provide video streams to output modules 1000 as well as to the front panel 1150. The output modules 1000 accept serial digital video from the video switch 230 or compressed video signals from the Ethernet switch 230, and convert these signals to formats compatible with video displays and other equipment, for example, to the HDMI format. Similarly, the front panel display 1150 accepts a variety of formats of video signals and converts these signals as necessary for display on an LCD screen 1160.

Referring back to Fig. 6 which shows a Digital Video Input Module with HDMI 600, a number of HDMI connecters 610, 620, 630, 640 receive digital video signals from external devices. These HDMI signals are passed to HDMI receivers 615, 625, 635, 645 that output serial digital video signals to the video switch 220.

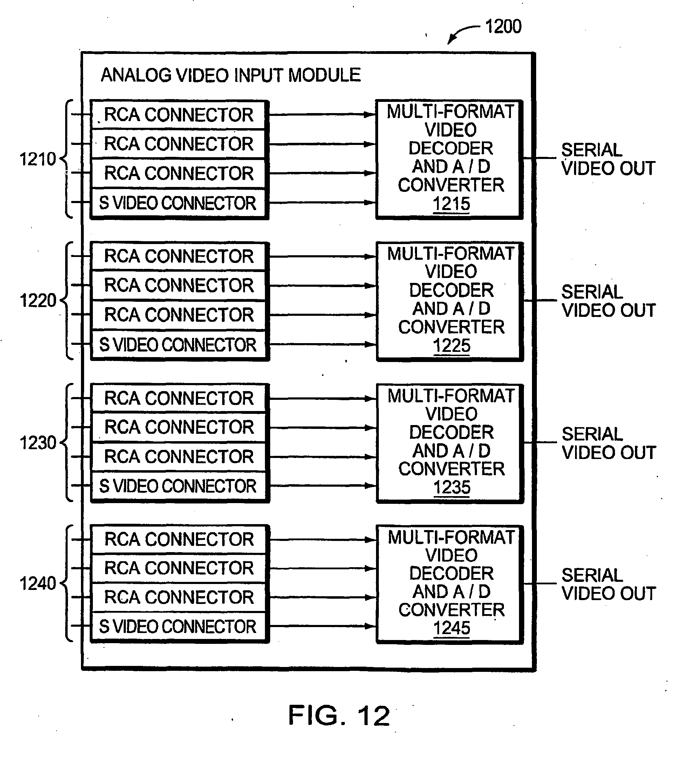

Fig. 12 is a schematic block diagram of an exemplary Analog Video Input Module 1200. The Analog Video Input Module 1200, in the illustrative embodiment, has 4 banks of video inputs 1210, 1220, 1230, 1240, each including 3 RCA connectors and an S-video connector. The RCA connectors may receive composite video or component video signals, in either SD or HD resolutions. Video signals are passed to multi-format video decoder and A/D converters 1215, 1225, 1235, 1245, such as the model AD7403 converters from Analog Devices Inc. The multi-format video decoders and A/D converters 1215, 1225, 1235, 1245 support a variety of well know video standards such as 525i, 625i, 525p, 625p, 720p, 1080i, 1250i, and others. Outputs from these devices, in the serial digital video format, are transmitted to the video crosspoint switch 220 for switching to other modules.

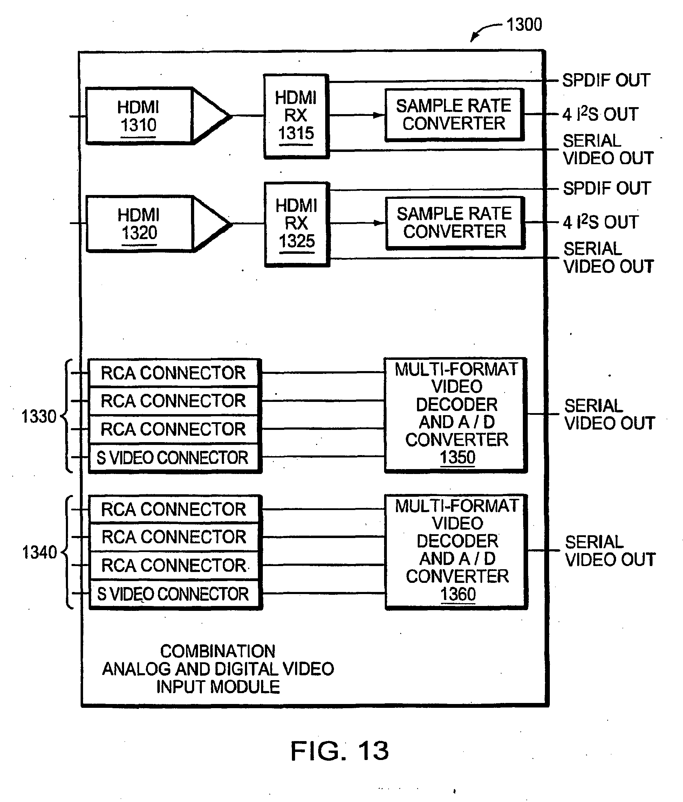

Fig. 13 is a schematic block diagram of an exemplary Combination Analog and Digital Video Input Module 1300. A combination module is advantageous in smaller systems, enabling a user to have basic analog and digital connectivity with fewer modules. For example, a basic system may be constructed having only a Combination Analog and Digital Video Input Module 1300 and a Video Output Module 1000. With only these two modules, the system would still be capable of considerable video switching functionality. In the illustrative embodiment, the Combination Analog and Digital Video Input Module 1300 has HDMI connectors 1310, 1320 interconnected to HDMI receivers 1315, 1325 that output serial digital video signals to the video switch 220. In addition, several banks of analog video inputs 1330, 1340, each having 3 RCA connectors and an S-video connector to receive composite, component, and S-video signals. Similar to the Digital Video Input Module with HDMI 600 discussed above, these signals are passed to multi-format video decoders and A/D converters 1350, 1360, such as model AD7403 video decoders from Analog Devices Inc., and converted to serial digital video signals for transmission to the video switch 220.

Referring back to Fig. 7, which is a schematic block diagram of an exemplary Auxiliary Audio Video Port 700, a variety of video connections to video game systems, camcorders, computers, karaoke machines, and/or other devices are provided. In the illustrative embodiment, a bank of analog video inputs 710 with 3 RCA connectors and an S-video connector, are provided to receive composite, component and S-video signals. The video signals pass to a multi-format video decoder and A/D converter 730 for conversion to serial digital video signals that may be sent to the video switch 220. Additional connection to the Video Game Port 700 is provided by HDMI connector 1340 interconnected to HDMI receivers 1350.

Referring back to Fig. 10, which is a schematic block diagram of a Video Output Module 1000 according to an illustrative embodiment of the programmable multimedia controller 100. Video signals may be received in a variety of formats, including serial digital video, parallel digital video, and compressed video over Ethernet. Compressed video is decoded by video decoder/encoder 1030 and then sent to the video processor 1040. The serial digital video signals are received directly by the video processor 1040 where they undergo deinterlacing, scaling, combination, frame rate conversion, picture-in-picture processing, and other video processing functions. The video processor 1040 further scales the video images to a resolution compatible with the intended display. In addition, parallel video signals are buffered by frame buffer interfaces 1050, 1055, in conjunction with two buffer DRAMs 1060, 1065 where they are synchronized to the video processor's output timing. Video signals from these frame buffers are combined and mixed by the video mixer 1070 with video output from the video processor. Outputs from the video mixer 1070 are coupled to HDMI transmitters 110, 1015 that output combined multi-channel audio and high definition digital video signals on HDMI ports 1020, 1025. Additional outputs are coupled to D/A converters 1080, 1085 that provide analog video outputs to banks of video outputs 1090, 1095, including 3 RCA connectors and an S-video connector.

A system configured in this manner permits a number of advantageous operations. For example, video from any source may be directed by the video switch 220 to the video decoder/encoder 1030 for compression and output as compressed video. Such compressed video may be stored on the processing subsystem 240 for later playback (i.e. time shifting) or transferred to removable media, such as a CDR or DVDR. In this way, digital video recorder (DVR) and personal video recorder (PVR) functions may be provided, allowing a user to capture and replay television programming or other content.

Further, the system may implement video overlay functions allowing portions of the input module video sources to be overlaid with video, graphics, and/or text from the processing subsystem. While a typical on-screen-display (OSD) function is common in video systems, conventional functions are generally limited to overlaying graphic or text data at a particular, predetermined, rectangular region of a video display. The present invention allows video, graphics, and/or text to be overlaid at any location of a video display on a pixel by pixel basis, other near pixel-by-pixel basis. Because the overlay is determined on to such a fine scale, an overlay of virtually any shape is possible. Further, the location of the overlay may be dynamically configured. That is, the region of display where the overlay is shown may be repositioned on a frame-by-frame basis, for example, to create a "moving" overlay. Further, mixing and blending logic may allow overlaid video, graphics, and/or text to be displayed in a semi-transparent manner or with a fade-in/fade-out effect.

To achieve the above described capabilities, the system takes advantage of the large number of colors that may be represented by digital video signals. For example, digital video signals encoded for 24-bit color are capable of representing about 16.7 million unique colors. In one embodiment of the present invention, the video processor 1040 changes the colors associated with the pixels in a region of a frame, where the video overlay is desired, to a predetermined color. The predetermined color may be an arbitrarily chosen color, preferably a color that has been determined to be used at a lower than average frequency in typical video. The video mixer 1070 is configured to recognize occurrences of the predetermined color, and at each pixel of a video frame where such color is present, substitute video data from another video stream. The video data from the other video stream may be full motion video, static images, and/or text. For example, a region set to the predetermined color may be overlaid with full motion video originating from the processing subsystem 240 and sent via parallel digital video signals. Similarly, the region may be overlaid by a text box generated by the processing subsystem 240.

By selecting different pixels to be changed to the predetermined color, the area of the video display that is overlaid can be readily changed. In such a manner overlays may be dynamically moved about the screen, or menus of any shape may be shown to dynamically expand to other screen regions when selected.

Generally, due to the large number of colors that may be represented by video signals, any "natural" occurrences of pixels of the predetermined color will be relatively low, and any inadvertent overlay of video resulting from such pixels will not be noticeable to a viewer. In an alternate embodiment, the video processor 1040, prior to changing selected pixels of a frame to the predetermined color, may scan the frame for occurrences of the color and change such pixels to a nearly identical shade, for example by adding a single bit. In such a manner inadvertent video overlays may be substantially eliminated.

In yet another embodiment, the video processor 1040 may change pixels in the region to be overlaid to a predetermined pattern of colors. For example, adjacent pixels may be changed to a repeating two-three-pixel pattern o, where each of the three adjacent pixels is a different predetermined color. As the probability of three predetermined colors occurring in adjacent pixels is extremely low, "natural" occurrences may be substantially eliminated.

It is further contemplated that it may be desirable to overlay portions of several distinct video streams onto each frame of a video display. It will be apparent to one skilled in the art that the above described technique may be extended by selecting additional predetermined colors to represent each overlay and configuring the video mixer 1070 to apply overlays where each of these colors is detected.

### Processing Subsystem

FIG. 14 is a schematic block diagram of a processing subsystem 240 according to an illustrative embodiment of the present invention. The processing subsystem 240 implements a user interface and other application programs to manage and provide functionality to the programmable multimedia controller 100. For example the processing subsystem 240 providing DVR functionality, audio and video editing functionality, home automation control and management, telephony control and a variety of other features through programmable services. Details regarding services that may be provided under the control of processing subsystem 240 may be found in U.S. Patent Application No. 11/314,112 PROGRAMMABLE MULTIMEDIA CONTROLLER WITH PROGRAMMABLE SERVICES.

The processing subsystem 240 may include a single computer, or two or more computers arranged to provide redundancy and/or load balancing. The term "computer" as used herein should be taken broadly to encompass a range of components that provide application specific or general purpose processing functionality. For example each "computer" may be a CPU card, a Single Board Computer (SBC), a PC/104 processing module, a conventional ATX form factor motherboard and CPU, an "off the-shelf" small form factor general purpose personal computer, and/or an "off the-shelf" large form factor or rack-mount general purpose personal computer. Accordingly, it is expressly contemplated that a variety of different "computers" may be advantageously employed in the processing subsystem 240, and that as technology advances, new technologies may be advantageously employed where appropriate.

In the illustrative embodiment, each computer 1410, 1420 is interconnected to a connection plane 1450 that provides a connection interface to the input and output ports of the computer. USB, IEEE 1394, Ethernet, DVI, and power ports, among others, are interconnected thought the connection plane 1450. In other embodiments, each computer 1410, 1420 may be located external to the home multimedia controller and connected to the programmable multimedia controller by a wired network connection or a wireless link, such as an IR, Wi-Fi, and/or Bluetooth™ link.

Further, each computer 1410, 1420 may be connected to storage devices 1430, 1440 that provide additional storage capacity, for example to store a digital media library. The storage devices 1430, 1440 may be individual hard disk drives, RAID arrays of multiple hard disk drives, non volatile optical or electromagnetic memory, and/or other types of data storage systems.

In the illustrative embodiment, the processing subsystem 240 includes two small form factor general purpose personal computers. Such computers are preferably used without physical modification, i.e. as they are "off the-shelf", and retain their original cases, components, and overall appearance. In one embodiment the two small form factor general purpose personal computers are Mac Mini™ computers available from Apple Computer, Inc. The Mac Mini™ computer measures approximately 2 inches in height, by 6.5 inches in width, by 6.5 inches in depth, and as such is conveniently shaped for incorporation into the processing subsystem. The Mac Mini™ computer includes an internal disk drive that may be used in conjunction with storage devices 1430, 1440 to provide expanded storage capacity, and/or for redundancy. The Mac Mini™ computer also include and internal WI-FI interface 1470, 1480 that may be used to provide WI-FI connection to the programmable multimedia controller 100.

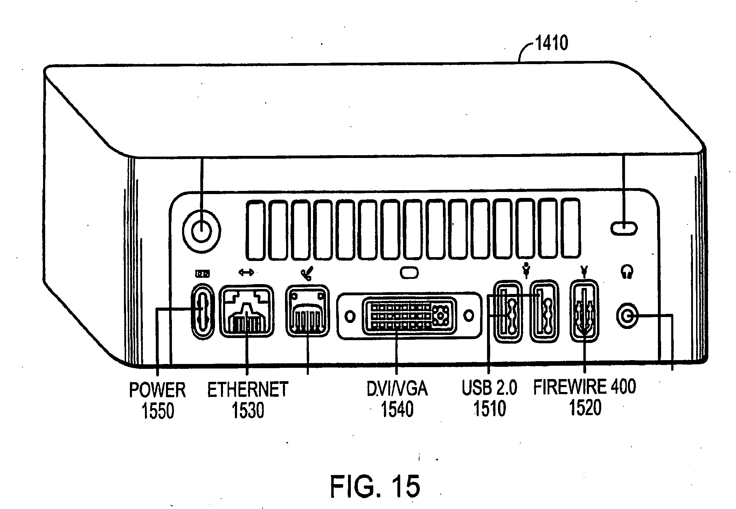

Fig. 15 is a perspective view showing a number of connection ports on an exemplary small form factor general purpose personal computer 1410. In the illustrative embodiment, the connection ports of the small form factor personal computer are arranged on a single face of the computer so that the computer may be "plugged into" suitably positioned connectors on the connection plane 1450. For example a USB Port 1510, an IEEE 1394 port 1520, an Ethernet port 1530, a DVI port 1540, and a power port 1550 may be connected by contact pressure to the connection plane 1450. Positioning rails (not shown) may be provided as part of bays in which the small form factor personal computers are inserted. Such rails to allow the computers to "slide" into bays and align with the connectors on the connection plane 1450. In an alternate embodiment, the small form factor general purpose personal computers 1410, 1420 are connected to the connection plane 1450 with a series of short connector cables (not shown) that interface with each port of the computer. Such cables may be readily repositioned to accommodate differing port locations and thereby accommodate differing computers.

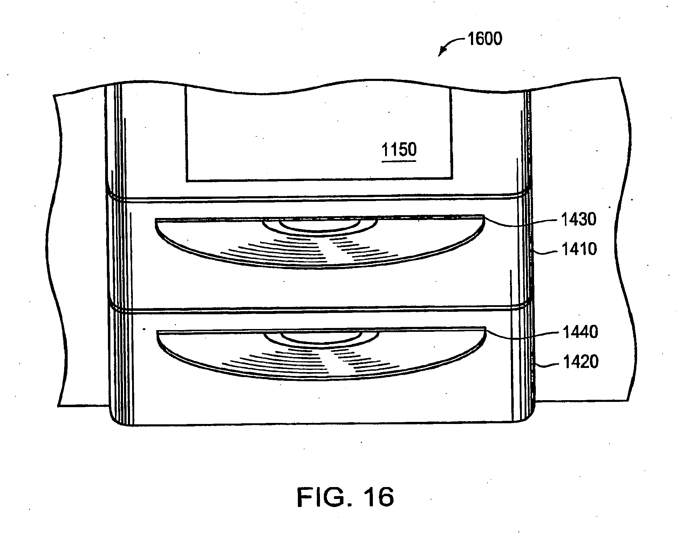

Fig. 16 is view of a portion of the front face 1600 of a programmable multimedia controller constructed in accordance with an illustrative embodiment of the present invention and depicting two small form factor general purpose personal computers 1410, 1420 inserted into bays. The front face 1600 of the programmable multimedia controller has a LCD display 1150, and inputs, outputs and control devices, such as knobs and buttons (not shown). In the illustrative embodiment the small form factor personal computers 1410, 1420 are Mac Mini™ computers that directly interconnect to the connection plane 1450. The front face 1600 of a programmable multimedia controller may be contoured and/or colored to match the contour and color of the front faces of the small form factor personal computers 1410, 1420 to provide a desirable visual appearance. In addition, media drives, such as optical drives 1430, 1440, may be available to a user.

### Control

Fig. 17a is a stylized block diagram showing control units interconnected to a programmable multimedia controller 100 according to an illustrative embodiment of the present invention. The programmable multimedia controller 100 is preferably interoperative with a number of different control units, to allow a user configure, manage, and otherwise operate the system with differing devices.

In a one embodiment, a media player 1710, such as hand-held DVD or MPEG player, a rack-mount DVD player, a media playing application software running on a general purpose computer, and/or another type of device, may be used as a remote control unit. The media player 1710 loads a special media file, for example by reading a DVD file from a DVD disk or other storage medium, such as hard disk drive or flash memory. The media file includes a user interface for the programmable multimedia controller 100. Alternately, the media player 1710 may receive the media file including the user interface from the programmable multimedia controller 100, via a wired or wireless interconnection. A user then manipulates the system by selecting menu items displayed on the media player, in a manner similar to the selecting of menu items provided with a typical DVD movie. Selection of particular menu items causes the media player to embed predetermined information in an output signal generated by the media player. In one embodiment, this output signal is a digital audio output signal. In another embodiment the output signal is a digital video signal or another type of signal.

The output signal may be received by a wireless audio interface 1720 that transmits the signal to the wireless audio module 380 of the programmable multimedia controller 100. Thereafter, the embedded information in the signal is decoded by the processing subsystem 240 to yield particular control commands. While in the illustrative embodiment signals are transmitted to the programmable multimedia controller 100 via a wireless connection, it is expressly contemplated that wired connections may also be employed. For example, wired connections to the Digital Audio Input Module 400 or the Analog Audio Input Module 500 may be provided, and signals received by such modules may be processed by the processing subsystem 240 to yield particular control commands.

It is further contemplated that devices other than DVD based media players may used with the above described embedded control technique. For example, a portable MP3 player, such as an IPOD™ manufactured by Apple Computer Inc. may generate signals with embedded control information in response selection of menu items. A CD player also may generate embedded control information, for example in response to a user selecting a particular track of a CD. Similarly, a video game system such as the PSP™ available from Sony Electronics Inc. may be used in a similar manner to generate control information in response to user input. Accordingly, it will be apparent to one skilled in the art that the above described technique may be readily adapted to be used with a variety of consumer devices capable of displaying information to a user and generating signals in response to a user's input.

In one embodiment, the embedded control technique described above is a robbed bit control technique where one or more bits of each data word of a digital output signal are used to store embedded control information. For example, the media player may change the least significant bit of a digital audio output signal to store control information, while the remaining bits of the output signal are left intact. As modern digital audio signals typically sampled using 16 or more bits, a change to the least significant bit generally is imperceptible to a listener. Further details regarding the robbed bit control technique may be found below in relation to Fig. 17b.

In another embodiment, the embedded control technique is a tone control technique, where a personal media player or other device generates an audio tone in response to a user's selection. Such tone may be transferred to the programmable multimedia controller 100 in a digital or an analog format. Thereafter, the audio tone is decoded by the programmable multimedia controller 100 to generate a particular control command. It is expressly contemplated that a number of other control techniques may be utilizes with the system, and as such, this description should be taken by way of example.

In addition the above described embedded control techniques, the programmable multimedia controller may also be controlled via one or more conventional hand held remotes 1730 that generate IR and/or RF signals. Such signals are received by the IR transmitter/receiver 260 and RF converter 267. Further a personal digital assistant, hand-held computer, or other device having a WI-FI interface according to the IEEE 802.11 standard, the Bluetooth™ standard, the Zigbee™ standard, or another standard, may be used to control the programmable multimedia controller 100. In a similar manner a personal computer 1750 running a control application may be connected to the programmable multimedia controller 100 via a WI-FI connection and/or via a wired connection to the Ethernet port 232. In one embodiment the personal computer 1750 is configured with a touch screen interface to allow a user to interactively select operations and otherwise control the system via touch pressure.

Fig. 17b is a schematic block diagram of an exemplary embedded control technique that uses robbed bit control. As described above, a media player or other control device may change one or more bits of a digital output signal, for example the least significant bit of a digital audio output signal. The digital audio signal is then received by the programmable multimedia controller 100, for example, by the Wireless Audio Module 380. The signal is then passed to a Robbed Bit Control Field Programmable Gate Array (FPGA) 1760. The least significant bit 1768 of each data word 1765 is stripped from the digital audio signal. The remaining signal may be sent to the audio switch 215, for possible output on speakers attached to the system. The least significant bits are received by Word Lock Logic 1770 which reconstructs control command words from the stream of least significant bits. The Word Lock Logic 1770 may look for predetermined bit patterns in the received least significant bits to establish a "lock" on word boundaries. That is, when a particular predetermined bit sequence is detected, the Word Lock Logic 1770 may determine that a word boundary follows. Thereafter, the bits are stored in buffer 1780 as control command words. The control command words are passed to an I²C expander 1790 and thereafter to the microcontroller 210. The microcontroller 210, in conjunction with the processing subsystem 240, implement the functionality indicated in the control command words. It will be apparent to one skilled in the art that various modification may be made to the above described robbed bit control technique without departing from the spirit of the invention. For example, other bits of an output signal from the media player may be used, such as the two least significant bits of each data word. Similarly, the signal need not be a digital audio signal. A digital video signal or other signal may be used to advantage with this technique.

### Expansion

A single programmable multimedia controller 100 may be interconnected to additional programmable multimedia controllers via an expansion port 280 (Fig. 2). The expansion port 280 allows connection of two or more audio and video switches, and the exchange of related control data. In this way, audio or video sources connected to one controller may be output from another controller that is located in a remote location, for example another area of a building or a different building.

Fig. 18 is a schematic block diagram of an exemplary audio interconnection and expansion scheme. Audio switches 215, 1810, 1820 of the programmable multimedia controllers 100, 1840, 1850 are interconnected to Ethernet network interfaces 1860, 1870, 1880. In the illustrative embodiment, the Ethernet network interfaces are CobraNet™ interfaces that perform synchronous-to-isochronous and isochronous-to-synchronous conversions, as well as the data formatting required for transporting real-time digital audio over an Ethernet network. The CobraNet™ interfaces also send Simple Network Management Protocol (SNMP) data through the Ethernet network. In the illustrative embodiment, four uncompressed audio streams may be sent to or from any single programmable multimedia controller. The Ethernet network itself may be a wired network, or it may be a WI-FI network implementing wireless networking protocol such as IEEE 802.11G.

Fig. 19 is a schematic block diagram of an exemplary video interconnection and expansion scheme. Video switches 220, 1910, 1920 of the programmable multimedia controllers 100, 1840, 1850 are interconnected by two serial video rings 1930, 1940. The serial video rings 1930, 1940 may be bundles of serial video lines, or alternately a single fiber optic link supporting a number of multiplexed serial video signals may be employed. In the illustrative embodiment, four serial video lines are Coarse Wavelength Division Multiplexed (CWDM) onto a single optical fiber such that each serial video signal is represent using different wavelengths.

### Exemplary Application

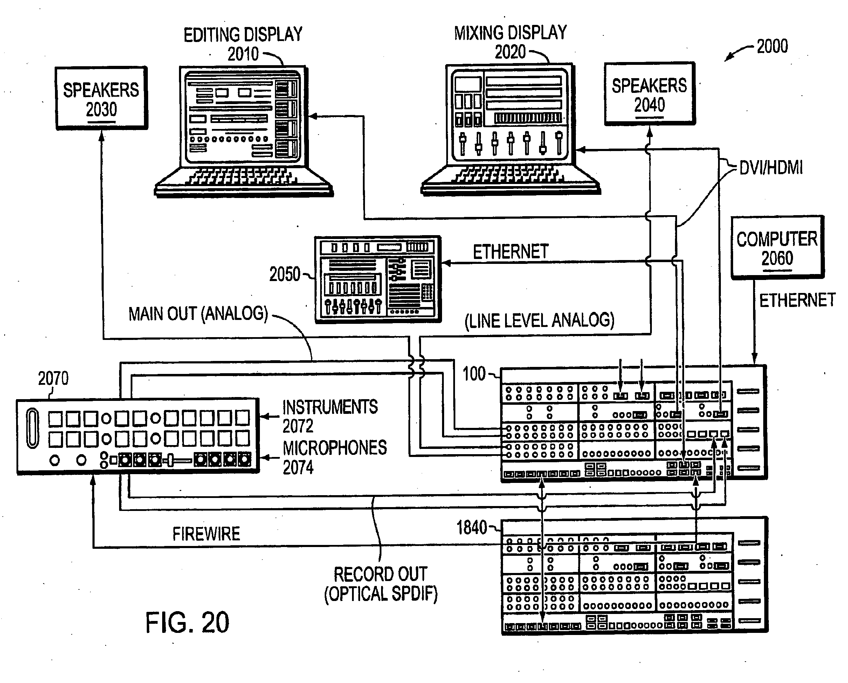

Fig. 20 is a schematic block diagram showing two programmable multimedia controllers 100, 1840 used in an exemplary application, specifically a professional audio recording and mixing application 2000. Such an application is just one example of the many different applications the programmable multimedia controllers may advantageously be used with.

As a professional audio recording and mixing studio generally requires a large amounts of connectivity to various audio devices, in this example, two programmable multimedia controllers 100, 1840 are interconnected according to the expansion schemes described above. An editing display 2010 and a mixing display 2020 are interconnected to the controllers, for example by a DVI or HDMI connection. The displays may be general purpose computers running application software having editing and mixing functionality, or running an interface to editing and mixing application software running elsewhere, for example on the programmable multimedia controllers 100, 1840 or on an interconnected computer 2060. Alternately, the editing and mixing displays 2010, 2020 may simply be computer monitors, for example touch screen monitors, interconnected to the programmable multimedia controllers 100, 1840. In addition, one or more application specific hardware units 2050, adapted for editing, mixing, or other tasks, may be interconnected to the programmable multimedia controllers 100, 1840, for example, by an Ethernet link. In this way, a wide variety of commonly used audio equipment may be interconnected.

An interface panel 2070 may also be interconnected via a variety of connections, for example analog audio, digital audio, and/or FireWire™ connections. The interface panel 2070 provides connection ports, such as instrument connection ports 2072 and microphone connection ports 2074. The received audio is transferred to the programmable multimedia controllers 100, 1840, and may be output on speakers 230, 240. In such manner the functionality of a professional audio recording and mixing studio may be provided using the programmable multimedia controllers and a minimum of additional hardware.

The foregoing description has been directed to particular embodiments of this invention. It will be apparent, however, that other variations and modifications may be made to the described embodiments, with the attainment of some or all of their advantages. Additionally, the procedures or processes may be implemented in hardware, software, embodied as a computer-readable medium having program instructions, firmware, or a combination thereof.

## Claims

1. A multimedia controller (100), comprising:
one or more audio input modules (400, 500) coupled to an audio crosspoint switch (215), each of the audio input modules having a connection for one or more audio signal sources, and each of the audio input modules configured to convert audio signals of varying formats to a predetermined audio signal format;
one or more video input modules (600) coupled to a video crosspoint switch (220), each of the video input modules having a connection for one or more video signal sources, and each of the video input modules configured to convert video signals of varying formats to a predetermined video signal format;
one or more audio output modules (800, 900) coupled to the audio crosspoint switch (215), each of the audio output modules having a connection for one or more audio output devices, and configured to convert the predetermined audio signal format to a format compatible with a selected audio output device;
one or more video output modules (1000) coupled to the video crosspoint switch(220), each of the video output modules having a connection for one or more video output devices, and each of the video output modules configured to convert the predetermined video signal format to a format compatible with a selected video output device; and
a general purpose personal computer (240) coupled in communicating relationship with the audio and video crosspoint switches, for controlling the switches such that audio signal sources are switched to selected audio output devices and video signal sources are switched to selected video output devices in accordance with one or more application programs executed by the general purpose personal computer.

2. The multimedia controller (100) of claim 1, wherein the general purpose personal computer (240) is a small form factor general purpose personal computer.

3. The multimedia controller (100) of claim 2, wherein the general purpose personal computer (240) is coupled to a connection plane of the multimedia controller through a plurality of connection ports arranged on a face of the general purpose computer.

4. The multimedia controller (100) of claim 1, wherein the predetermined audio signal format is Sony/Philips Digital Interconnect Format (S/PDIF) or Inter-IC Sound (I²S) format.

5. The multimedia controller (100) of claim 1, further comprising:
an asynchronous sample rate converter coupled to one of the audio input modules, the asynchronous sample rate converter configured to insert blank frames into non-standard data transfer rate audio signals to convert such audio signals to a standard data transfer rate.

6. The multimedia controller (100) of claim 1, wherein the predetermined video signal format is Serial Digital Interface (SDI) format or a parallel digital video format.

7. The multimedia controller (100) of claim 1, wherein the general purpose personal computer (240) is configured to compress video signals and output compressed video over one or more Ethernet network interfaces.

8. The multimedia controller (100) of claim 1, further comprising:
a telephony interface configured to communicate with a telephone network.

9. The multimedia controller (100) of claim 8, wherein the telephony interface comprises at least one of Foreign exchange Office (FXO) circuitry and Foreign exchange Subscriber (FXS) circuitry.

10. The multimedia controller (100) of claim 8, wherein the telephony interface is configured to connect to Plain Old Telephone Service (POTS).

11. The multimedia controller (100) of claim 1, further comprising:
a microcontroller coupled to the audio crosspoint switch (215) and the video crosspoint switch (220), the microcontroller configured to manage a plurality of interfaces to devices.

12. The multimedia controller (100) of claim 11, wherein at least one of the plurality of interfaces to devices is selected from the group consisting of a telephony interface, a memory card interface, a radio frequency (RF) interface, an Infra-Red (IR) interface, and an RS232 interface.

13. The multimedia controller (100) of claim 11, wherein the general purpose personal computer (240) is configured to generate audio signals and the audio crosspoint switch (215) is configured to switch the generated audio signals to a selected audio output device.

14. The multimedia controller (100) of claim 1, further comprising:
a front panel display configured to display status and configuration information to a user.

15. The multimedia controller (100) of claim 14, wherein the front panel display is a display screen configured to display video data originating from a video source attached to one of the video input modules.

16. The multimedia controller (100) of claim 14, wherein the front panel display is a display screen configured to display video data originating from the general purpose personal computer.

17. The multimedia controller (100) of claim 1, further comprising:
a second general purpose personal computer coupled in communicating relationship with the audio and video crosspoint switches, the second general purpose personal computer configured to provide redundant control of the audio and video crosspoint switches in case of failure to the general purpose personal computer.

18. The multimedia controller (100) of claim 1, further comprising:
a device control interface configured to communicate with, and to control, lighting and home automation devices.

19. The multimedia controller (100) of claim 1, further comprising:
a device control interface configured to communicate with, and to control, motor and relay operated devices.

20. The multimedia controller (100) of claim 19, wherein the motor and relay operated devices include at least one device selected from the group consisting of a heating, ventilation and air conditioning (HVAC) system, an irrigation system, an automatic blind system, and an electronic door lock.

21. The multimedia controller (100) of claim 1, further comprising:
an interface configured to communicate with, and to control, one or more members of the group consisting of the one or more audio signal sources, the one or more video signal sources, the one or more audio output devices, and the one or more video output devices.

22. The multimedia controller (100) of claim 1, further comprising:
one or more storage devices configured to store audio and video signals, and wherein the general purpose personal computer is configure to operate as a digital video recorder (DVR).

23. A method for operating a multimedia controller (100), comprising:
receiving one or more audio signals from one or more audio signal sources, the audio signals of varying formats;
converting the audio signals to a predetermined audio signal format;
receiving one or more video signals from one or more video signal sources, the video signals of varying formats;
converting the video signals to a predetermined video signal format;
switching the audio signals to a selected audio output device and switching the video signals to a selected video output device, in response to one or more application programs executing on a general purpose personal computer (240) of the multimedia controller;
converting the audio signals in the predetermined audio signal format to a format compatible with the selected audio output device; and
converting the video signals in the predetermined video signal format to a format compatible with the selected video output device.

24. The method of claim 23, wherein the general purpose personal computer (240) is a small form factor general purpose personal computer.

25. The method of claim 24, further comprising:
coupling the general purpose personal computer (240) to a connection plane of the multimedia controller through a plurality of connection ports arranged on a face of the general purpose personal computer.

26. The method of claim 23, wherein converting the audio signals to a predetermined audio signal format further comprises:
inserting blank frames into non-standard data transfer rate audio signals to convert such audio signals to a standard data transfer rate.

27. The method of claim 23, further comprising:
coupling the multimedia controller (100) to a telephone network with a telephony interface.

28. The method of claim 23, further comprising:
generating audio signals, by the general purpose personal computer (240), and switching the generated audio signals to a selected audio output device.

29. The method of claim 23, further comprising:
communicating with, and controlling, at least one device selected from the group consisting of a heating, ventilation and air conditioning (HVAC) system, an irrigation system, an automatic blind system, and an electronic door lock.

30. The method of claim 23, further comprising:
communicating with, and controlling, one or more members of the group consisting of the one or more audio signal sources, the one or more video signal sources, the one or more audio output devices, and the one or more video output devices.

## Patentansprüche

1. Multimedia-Kontrollgerät (100), umfassend:
ein oder mehrere Audioeingangsmodule (400, 500), die mit einem Audio-Crosspoint-Schalter (215) gekoppelt sind, jedes der Audioeingangsmodule einen Anschluss für eine oder mehrere Audiosignalquellen aufweist, und
jedes der Audioeingangsmodule so ausgelegt ist, um Audiosignale veränderlicher Formate in ein vorgegebenes Audiosignalformat umzuwandeln;
ein oder mehrere Videoeingangsmodule (600), die mit einem Video-Crosspoint-Schalter (220) gekoppelt sind, jedes der Videoeingangsmodule einen Anschluss für eine oder mehrere Videosignalquellen aufweist, und
jedes der Videoeingangsmodule so ausgelegt ist, um Videosignale veränderlicher Formate in ein vorgegebenes Videosignalformat umzuwandeln;
ein oder mehrere Audioausgangsmodule (800, 900), die mit dem Audio-Crosspoint-Schalter (215) gekoppelt sind, jedes der Audioausgangsmodule einen Anschluss für ein oder mehrere Audioausgabegeräte aufweist und so ausgelegt ist, um das vorgegebene Audiosignalformat in ein Format umzuwandeln, das mit einem ausgewählten Audioausgabegerät kompatibel ist;
ein oder mehrere Videoausgangsmodule (1000), die mit dem Video-Crosspoint-Schalter (220) gekoppelt sind, jedes der Videoausgangsmodule einen Anschluss für einen oder mehrere Videoausgabegeräte aufweist, und jedes der Videoausgangsmodule so ausgelegt ist, um das vorgegebene Videosignalformat in ein Format umzuwandeln, das mit einem ausgewählten Videoausgabegerät kompatibel ist; und
einen Mehrzweck-Arbeitsplatzcomputer (240), der mit den Audio- und Video-Crosspoint-Schaltern in kommunizierender Beziehung zum Steuern der Schalter gekoppelt ist, so dass in Übereinstimmung mit einem oder mehreren, von dem Mehrzweck-Arbeitsplatzcomputer ausgeführten,
Anwenderprogrammen Audiosignalquellen auf ausgewählte Audioausgabegeräte umgeschaltet und Videosignalquellen auf ausgewählte Videoausgabegeräte umgeschaltet werden.

2. Multimedia-Kontrollgerät (100) nach Anspruch 1, bei dem der Mehrzweck-Arbeitsplatzcomputer (240) ein Mehrzweck-Arbeitsplatzcomputer kleiner Baugröße ist.

3. Multimedia-Kontrollgerät (100) nach Anspruch 2, bei dem der Mehrzweck-Arbeitsplatzcomputer (240) mit einer Anschlussebene des Multimedia-Kontrollgerätes durch eine Vielzahl von Verbindungsports, die auf einer Vorderfläche des Mehrzweckcomputers angeordnet sind, gekoppelt ist.

4. Multimedia-Kontrollgerät (100) nach Anspruch 1, bei dem das vorgegebene Audiosignalformat das Sony/Philips Digital Interconnect Format (S/PDIF) oder das Inter-IC Sound (I²S) Format ist.

5. Multimedia-Kontrollgerät (100) nach Anspruch 1, des Weiteren umfassend:
einen asynchronen Abtastratenwandler, der mit einem der Audioeingangsmodule gekoppelt ist, wobei der asynchrone Abtastratenwandler so ausgelegt ist, um leere Datenübertragungsblöcke in Audiosignale von nicht standardisierter Datenübertragungsrate zum Umwandeln solcher Audiosignale in eine standardisierte Datenübertragungsrate einzufügen.

6. Multimedia-Kontrollgerät (100) nach Anspruch 1, bei dem das vorgegebene Videosignalformat ein SDI Format (Serial Digital Interface) oder ein paralleles digitales Videoformat ist.

7. Multimedia-Kontrollgerät (100) nach Anspruch 1, bei dem der Mehrzweck-Arbeitsplatzcomputer (240) so ausgelegt ist, um Videosignale zu komprimieren und komprimiertes Video über eine oder mehrere Ethernet-Netzwerkschnittstellen auszugeben.

8. Multimedia-Kontrollgerät (100) nach Anspruch 1, des Weiteren umfassend:
eine Telefondienst-Schnittstelle, die zum Kommunizieren mit einem Telefonnetz konfiguriert ist.

9. Multimedia-Kontrollgerät (100) nach Anspruch 8, bei dem die Telefondienst-Schnittstelle eine FXO-Schaltung (Telefon) und/oder eine FXS-Schaltung (Telefonnetz) aufweist.

10. Multimedia-Kontrollgerät (100) nach Anspruch 8, bei dem die Telefondienst-Schnittstelle zum Verbinden mit einfachem alten Telefondienst (POTS) konfiguriert ist.

11. Multimedia-Kontrollgerät (100) nach Anspruch 1, des Weiteren umfassend:
einen mit dem Audio-Crosspoint-Schalter (215) und dem Video-Crosspoint-Schalter (220) gekoppelten Mikrokontroller, wobei der Mikrokontroller so konfiguriert ist, um eine Vielzahl von Schnittstellen für Geräte zu verwalten.

12. Multimedia-Kontrollgerät (100) nach Anspruch 11, bei dem zumindest eine der Vielzahl von Schnittstellen für Geräte aus der Gruppe ausgewählt ist, die aus einer Telefondienst-Schnittstelle, einer Speicherkarten-Schnittstelle, einer Hochfrequenz-Schnittstelle (RF), einer Infrarot-Schnittstelle (IR) und einer RS 232-Schnittstelle besteht.

13. Multimedia-Kontrollgerät (100) nach Anspruch 11, bei dem der Mehrzweck-Arbeitsplatzcomputer (240) so ausgelegt ist, um Audiosignale zu erzeugen, und der Audio-Crosspoint-Schalter (215) so ausgelegt ist, um die erzeugten Audiosignale zu einem ausgewählten Audioausgabegerät zu schalten.

14. Multimedia-Kontrollgerät (100) nach Anspruch 1, des Weiteren umfassend:
eine Frontplattenanzeige, die ausgelegt ist, um einem Anwender Status - und Konfigurationsinformationen anzuzeigen.

15. Multimedia-Kontrollgerät (100) nach Anspruch 14, bei dem die Frontplattenanzeige ein Bildschirm ist, der so ausgelegt ist, um Videodaten anzuzeigen, die von einer an eines der Videoeingangsmodule angeschlossenen Videoquelle herrühren.

16. Multimedia-Kontrollgerät (100) nach Anspruch 14, bei dem die Frontplattenanzeige ein Bildschirm ist, der ausgelegt ist, um Videodaten anzuzeigen, die von dem Mehrzweck-Arbeitsplatzcomputer herrühren.

17. Multimedia-Kontrollgerät (100) nach Anspruch 1, des Weiteren umfassend:
einen zweiten Mehrzweck-Arbeitsplatzcomputer, der in kommunizierender Beziehung mit den Audio- und Video-Crosspoint-Schaltern gekoppelt ist, wobei der zweite Mehrzweck-Arbeitsplatzcomputer so ausgelegt ist, um im Falle einer Störung eine redundante Steuerung der Audio- und Video-Crosspoint-Schalter für den Mehrzweck-Arbeitsplatzcomputer bereitzustellen.

18. Multimedia-Kontrollgerät (100) nach Anspruch 1, des Weiteren umfassend:
eine Gerätesteuerungsschnittstelle, die zum Kommunizieren mit und zum Steuern von Beleuchtungsgeräten und Geräten zur Automatisierung privater Haushalte ausgelegt ist.

19. Multimedia-Kontrollgerät (100) nach Anspruch 1, des Weiteren umfassend:
eine Gerätesteuerungsschnittstelle, die zum Kommunizieren mit und zum Steuern von mit Motor und Relais betriebenen Geräten ausgelegt ist.

20. Multimedia-Kontrollgerät (100) nach Anspruch 19, bei dem die mit Motor und Relais betriebenen Geräte zumindest ein Gerät einschließen, das von der aus einem Heizungs-, Lüftungs- und Klimatechniksystem, einem Bewässerungssystem, einem automatischen Jalousiensystem und einem elektronischen Türschloss bestehenden Gruppe ausgewählt ist.

21. Multimedia-Kontrollgerät (100) nach Anspruch 1, des Weiteren umfassend:
eine Schnittstelle, die zum Kommunizieren mit einem oder mehreren Elementen der Gruppe, die aus der einen oder mehreren Audiosignalquellen, der einen oder mehreren Videosignalquellen, dem einen oder mehreren Audioausgabegeräten und dem einen oder mehreren Videoausgabegeräten besteht, und zum Steuern derselben ausgelegt ist.

22. Multimedia-Kontrollgerät (100) nach Anspruch 1, des Weiteren umfassend:
ein oder mehrere Speichergeräte, die zum Speichern von Audio- und
Videosignalen ausgelegt sind, und bei dem der Mehrzweck-Arbeitsplatzcomputer ausgelegt ist, um wie ein digitaler Videorekorder (DVR) betrieben zu werden.

23. Verfahren zum Betreiben eines Multimedia-Kontrollgerätes (100), umfassend:
Empfangen eines oder mehrerer Audiosignale von einer oder mehreren Audiosignalquellen, der Audiosignale wechselnder Formate;
Umwandeln der Audiosignale in ein vorgegebenes Audiosignalformat;
Empfangen eines oder mehrerer Videosignale von einer oder mehreren Videosignalquellen, der Videosignale wechselnder Formate;
Umwandeln der Videosignale in ein vorgegebenes Videosignalformat;
Schalten der Audiosignale zu einem ausgewählten Audioausgabegerät und Schalten der Videosignale zu einem ausgewählten Videoausgabegerät als Reaktion auf ein oder mehrere Anwenderprogramme, die auf einem Mehrzweck-Arbeitsplatzcomputer (240) des Multimedia-Kontrollgerätes ausgeführt werden;
Umwandeln der Audiosignale in dem vorgegebenen Audiosignalformat in ein Format, das mit dem ausgewählten Audioausgabegerät kompatibel ist;
und
Umwandeln der Videosignale in dem vorgegebenen Videosignalformat in ein Format, das mit dem ausgewählten Videoausgabegerät kompatibel ist.

24. Verfahren nach Anspruch 23, bei dem der Mehrzweck-Arbeitsplatzcomputer (240) ein Mehrzweck-Arbeitsplatzcomputer kleiner Baugröße ist.

25. Verfahren nach Anspruch 24, des Weiteren umfassend:
Koppeln des Mehrzweck-Arbeitsplatzcomputers (240) mit einer Anschlussebene des Multimedia-Kontrollgerätes durch eine Vielzahl von Verbindungsports, die auf einer Vorderfläche des Mehrzweck-Arbeitsplatzcomputers angeordnet sind.

26. Verfahren nach Anspruch 23, bei dem das Umwandeln der Audiosignale in ein vorgegebenes Audiosignalformat des Weiteren umfasst:
Einfügen von leeren Datenübertragungsblöcken in Audiosignale nicht standardisierter Datenübertragungsrate, um solche Audiosignale zu einer standardisierten Datenübertragungsrate umzuwandeln.

27. Verfahren nach Anspruch 23, des Weiteren umfassend:
Koppeln des Multimedia-Kontrollgerätes (100) an ein Telefonnetz mit einer Telefondienst-Schnittstelle.

28. Verfahren nach Anspruch 23, des Weiteren umfassend:
Erzeugen von Audiosignalen durch den Mehrzweck-Arbeitsplatzcomputer (240) und Schalten der erzeugten Audiosignale zu einem ausgewählten Audioausgabegerät.

29. Verfahren nach Anspruch 23, des Weiteren umfassend:
Kommunizieren mit zumindest einem Gerät und Steuern desselben, das von der aus einem Heizungs-, Lüftungs- und Klimatechniksystem, einem Bewässerungssystem, einem automatischen Jalousiensystem und einem elektronischen Türschloss bestehenden Gruppe ausgewählt ist.

30. Verfahren nach Anspruch 23, des Weiteren umfassend:
Kommunizieren mit einem oder mehreren Elementen der Gruppe, die aus der einen oder mehreren Audiosignalquellen, der einen oder mehreren Videosignalquellen, dem einen oder mehreren Audioausgabegeräten und dem einen oder mehreren Videoausgabegeräten besteht, und Steuern derselben.

## Revendications

1. Contrôleur multimédia (100) comprenant :
un ou plusieurs modules d'entrée audio (400, 500) couplés à un commutateur audio à point de croisement (215), chacun des modules d'entrée audio ayant une connexion pour une ou plusieurs sources de signal audio, et chacun des modules d'entrée audio est configuré pour convertir des signaux audio de divers formats en un format de signal audio prédéterminé;
un ou plusieurs modules d'entrée vidéo (600) couplés à un commutateur vidéo à point de croisement (220), chacun des modules d'entrée vidéo ayant une connexion pour une ou plusieurs sources de signaux vidéo, et
chacun des modules d'entrée vidéo est configuré pour convertir des signaux vidéo de divers formats en un format de signal vidéo prédéterminé;
un ou plusieurs modules de sortie audio (800, 900) couplés au commutateur audio à point de croisement (215), chacun des modules de sortie audio ayant une connexion pour un ou plusieurs dispositifs de sortie audio, et étant configuré pour convertir le format de signal audio prédéterminé en un format compatible avec un dispositif de sortie audio sélectionné;
un ou plusieurs modules de sortie vidéo (1000) couplés au commutateur vidéo à point de croisement (220), chacun des modules de sortie vidéo ayant une connexion pour un ou plusieurs dispositifs de sortie vidéo, et chacun des modules de sortie vidéo est configuré pour convertir le format de signal vidéo prédéterminé en un format compatible avec un dispositif de sortie vidéo sélectionné; et
un ordinateur personnel d'utilisation générale (240) couplé en relation de communication avec les commutateurs audio et vidéo à point de croisement, pour contrôler les commutateurs de telle façon que les sources de signaux audio sont commutées à des dispositifs de sortie audio sélectionnés et les sources de signaux vidéo sont commutées à des dispositifs de sortie vidéo sélectionnés en accord avec un ou plusieurs programmes d'application exécutés par l'ordinateur personnel d'utilisation générale.

2. Contrôleur multimédia (100) selon la revendication 1, dans lequel l'ordinateur personnel d'utilisation générale (240) est un ordinateur personnel d'utilisation générale à petit facteur de forme.

3. Contrôleur multimédia (100) selon la revendication 2, dans lequel l'ordinateur personnel d'utilisation générale (240) est couplé à un plan de connexion du contrôleur multimédia via une pluralité de ports de connexion agencés sur une face de l'ordinateur d'utilisation générale.

4. Contrôleur multimédia (100) selon la revendication 1, dans lequel le format de signal audio prédéterminé et un format d'interconnexion numérique Sony/Philips (S/PDIF) ou un format Inter-IC-Sound (I²S).

5. Contrôleur multimédia (100) selon la revendication 1, comprenant en outre:
un convertisseur à taux d'échantillonnage asynchrone couplé à l'un des modules d'entrée audio, le convertisseur à taux d'échantillonnage asynchrone étant configuré pour insérer des trames vides dans des signaux audio à taux de transfert de données non standard pour convertir de tels signaux audio vers un taux de transfert de données standard.

6. Contrôleur multimédia (100) selon la revendication 1, dans lequel le format de signal vidéo prédéterminé est un format interface numérique série (SDI) ou un format vidéo numérique parallèle.

7. Contrôleur multimédia (100) selon la revendication 1, dans lequel l'ordinateur personnel d'utilisation générale (240) est configuré pour comprimer des signaux vidéo et délivrer des vidéos comprimées via une ou plusieurs interfaces de réseau Ethernet.

8. Contrôleur multimédia (100) selon la revendication 1, comprenant en outre une interface de téléphonie configurée pour communiquer avec un réseau téléphonique.

9. Contrôleur multimédia (100) selon la revendication 8, dans lequel l'interface de téléphonie comprend au moins un circuit parmi un circuit "Foreign eXchange Office" (FXO) et un circuit "Foreign eXchange Subscriber" (FXS).

10. Contrôleur multimédia (100) selon la revendication 8, dans lequel l'interface de téléphonie est configurée pour être connectée à un service "Plain Old Telephone Services" (POTS).

11. Contrôleur multimédia (100) selon la revendication 1, comprenant en outre un microcontrôleur couplé au commutateur audio à point de croisement (215) et au commutateur vidéo à point de croisement (220) le microcontrôleur étant configuré pour gérer une pluralité d'interfaces vers des dispositifs.

12. Contrôleur multimédia (100) selon la revendication 11, dans lequel l'une au moins de la pluralité d'interfaces vers des dispositifs est choisie parmi le groupe comprenant une interface de téléphonie, une interface de carte à mémoire, une interface à radiofréquences (RF) une interface infrarouge (IR), et une interface RS232.

13. Contrôleur multimédia (100) selon la revendication 11, dans lequel l'ordinateur personnel d'utilisation générale (240) est configuré pour générer des signaux audio et le commutateur audio à point de croisement (215) est configuré pour commuter les signaux audio générés vers un dispositif de sortie audio sélectionné.

14. Contrôleur multimédia (100) selon la revendication 1, comprenant en outre:
un affichage à panneau frontal configuré pour afficher des informations d'état et de configuration pour un utilisateur.

15. Contrôleur multimédia (100) selon la revendication 14, dans lequel l'affichage à panneau frontal est un écran d'affichage configuré pour afficher des données vidéo provenant d'une source vidéo attachée à l'un des modules d'entrée vidéo.

16. Contrôleur multimédia (100) selon la revendication 14, dans lequel l'affichage à panneau frontal est un écran d'affichage configuré pour afficher des données vidéo provenant de l'ordinateur personnel d'utilisation générale.

17. Contrôleur multimédia (100) selon la revendication 1, comprenant en outre:
un second ordinateur personnel d'utilisation générale couplé en relation de communication avec les commutateurs audio et vidéo à point de croisement, le second ordinateur personnel d'utilisation générale étant configuré pour fournir un contrôle redondant des commutateurs audio et vidéo à point de croisement dans le cas d'une défaillance de l'ordinateur personnel d'utilisation générale.

18. Contrôleur multimédia (100) selon la revendication 1, comprenant en outre une interface de commande de dispositifs configurée pour communiquer avec et pour commander des dispositifs d'éclairage et d'automation domestique.

19. Contrôleur multimédia (100) selon la revendication 1, comprenant en outre une interface de commande de dispositifs configurée pour communiquer avec et pour commander des dispositifs à moteur et des dispositifs actionnés par relais.

20. Contrôleur multimédia (100) selon la revendication 19, dans lequel les dispositifs à moteur et les dispositifs actionnés par relais incluent au moins un dispositif choisi parmi le groupe comprenant un système de chauffage, ventilation et conditionnement d'air (CVCA), un système d'irrigation, un système de stores automatiques, et une serrure de porte électronique.

21. Contrôleur multimédia (100) selon la revendication 1, comprenant en outre une interface configurée pour communiquer avec et pour commander un ou plusieurs éléments du groupe comprenant lesdites une ou plusieurs sources de signaux audio, lesdites une ou plusieurs sources de signaux vidéo, lesdits un ou plusieurs dispositifs de sortie audio, et lesdits un ou plusieurs dispositifs de sortie vidéo.

22. Contrôleur multimédia (100) selon la revendication 1, comprenant en outre un ou plusieurs dispositifs de stockage configurés pour stocker des signaux audio et vidéo, et dans lequel l'ordinateur personnel d'utilisation générale est configuré pour fonctionner comme un enregistreur vidéo numérique (DVR).

23. Procédé pour le fonctionnement d'un contrôleur multimédia (100) comprenant les étapes consistant à:
recevoir un ou plusieurs signaux audio depuis une ou plusieurs sources de signaux audio, les signaux audio ayant divers formats;
convertir les signaux audio en un format de signal audio prédéterminé;
recevoir un ou plusieurs signaux vidéo depuis une ou plusieurs sources de signaux vidéo, les signaux vidéo ayant divers formats;
convertir les signaux vidéo à un format de signal vidéo prédéterminé;
commuter les signaux audio vers un dispositif de sortie audio choisi et commuter les signaux vidéo vers un dispositif de sortie vidéo choisi, en réponse à un ou plusieurs programmes d'application exécutés sur un ordinateur personnel d'utilisation générale (240) du contrôleur multimédia;
convertir les signaux audio dans le format de signal audio prédéterminé vers un format compatible avec le dispositif de sortie audio choisi; et
convertir les signaux vidéo dans le format de signal vidéo prédéterminé vers un format compatible avec le dispositif de sortie vidéo choisi.

24. Procédé selon la revendication 23, dans lequel l'ordinateur personnel d'utilisation générale (240) est un ordinateur personnel d'utilisation générale à petit facteur de forme.

25. Procédé selon la revendication 24, comprenant en outre l'étape consistant à coupler l'ordinateur personnel d'utilisation générale (240) à un plan de connexion du contrôleur multimédia via une pluralité de ports de connexion agencés sur une face de l'ordinateur personnel d'utilisation générale.

26. Procédé selon la revendication 23, dans lequel la conversion des signaux audio vers un format de signal audio prédéterminé comprend en outre l'opération consistant à insérer des trames vides dans des signaux audio à taux de transfert de données non standard pour convertir de tels signaux audio en un taux de transfert de données standard.

27. Procédé selon la revendication 23, comprenant en outre l'opération consistant à coupler le contrôleur multimédia (100) à un réseau téléphonique avec une interface de téléphonie.

28. Procédé selon la revendication 23, comprenant en outre l'opération consistant à générer des signaux audio, par l'ordinateur personnel d'utilisation générale (240), et à commuter les signaux audio générés vers un dispositif de sortie audio choisi.

29. Procédé selon la revendication 23, comprenant en outre l'opération consistant à communiquer avec et à commander au moins un dispositif choisi parmi le groupe comprenant un système de chauffage, ventilation et conditionnement d'air (CVCA), un système d'irrigation, un système de stores automatiques, et un verrou de porte électronique.

30. Procédé selon la revendication 23, comprenant en outre l'opération consistant à communiquer avec et à commander un ou plusieurs éléments du groupe comprenant lesdites une ou plusieurs sources de signaux audio, lesdites une ou plusieurs sources de signaux vidéo, lesdits un ou plusieurs dispositifs de sortie audio, et lesdits un ou plusieurs dispositifs de sortie vidéo.
